# EUROPÄISCHE PATENTSCHRIFT

(11) **EP 3 723 870 B1**
(45) Veröffentlichungstag und Bekanntmachung des Hinweises auf die Patenterteilung: **22.02.2023**
(21) Anmeldenummer: 19717293.5
(22) Anmeldetag: 09.04.2019
(51) Int. Cl.: A62B 18/00, F04D 25/06, F04D 27/00, H02H 9/00, H02J 7/00, A62B 7/10

(54) **GEBLÄSEFILTERSYSTEM FÜR EXPLOSIONSGEFÄHRDETE BEREICHE UND VERFAHREN ZUM BETREIBEN EINES GEBLÄSEFILTERGERÄTS**
FAN FILTER SYSTEM FOR POTENTIALLY EXPLOSIVE AREAS AND METHOD FOR OPERATING A FAN FILTER DEVICE
SYSTÈME FILTRANT À VENTILATION ASSISTÉE POUR ZONES À RISQUE D'EXPLOSION ET PROCÉDÉ PERMETTANT DE FAIRE FONCTIONNER UN APPAREIL FILTRANT À VENTILATION ASSISTÉE

(30) Priorität: 11.04.2018 DE 102018002952
(43) Veröffentlichungstag der Anmeldung: 21.10.2020
(73) Patentinhaber: Dräger Safety AG & Co. KGaA, 23560 Lübeck (DE)
(72) Erfinder: VOLMER, Achim, 23628 Krummesse (DE); SCHULZE, Martin, 23996 Bad Kleinen (DE)
(74) Vertreter: Meyer-Gramann, Klaus Dieter
(86) Internationale Anmeldenummer: PCT/EP2019/058947
(87) Internationale Veröffentlichungsnummer: WO 2019/197400

(56) Entgegenhaltungen:
- CN-U- 203 660 561
- DE-A1- 19 807 907
- DE-A1-102013 011 251
- DE-A1-102016 215 688
- US-A1- 2006 152 194
- US-A1- 2013 106 355
- US-A1- 2016 226 107

## Beschreibung

Die Erfindung betrifft ein Gebläsefiltergerät, das sich mit einer Spannungsversorgungseinheit verbinden lässt, ein Gebläsefiltersystem mit einem solchen Gebläsefiltergerät und einer Spannungsversorgungseinheit sowie ein Verfahren zum Betreiben eines solchen Gebläsefiltergeräts.

Bekannt sind passive Atemschutzvorrichtungen mit Atemschutzfiltern, welche ein Anwender vor dem Gesicht tragen kann und welche dem Anwender Schutz vor gesundheitsschädigenden oder giftigen Gasen, Partikeln oder dergleichen bieten. Aufgrund ihres Aufbaus haben passive Atemschutzvorrichtungen grundsätzlich den Nachteil, dass ein Luftansaugdruck aufgrund eines inneren Widerstands des Atemschutzfilters erhöht ist.

Um diesen Nachteil zu vermeiden, werden Gebläsefiltergeräte eingesetzt, welche den Atemwiderstand im Gegensatz zu passiven Atemschutzvorrichtungen herabsetzen und so eine lange ermüdungsfreie Anwendung ermöglichen oder zumindest verbessern.

Ein übliches Gebläsefiltergerät wird typischerweise am Gürtel des Benutzers getragen und wird auch als "Powered Air Purifying Respirator" oder "PAPR" bezeichnet. Weiterhin umfasst es ein Kopfstück, das beispielsweise als Haube, Maske, Mundstück oder dergleichen ausgeführt sein kann. Gebläsefiltergerät und Kopfstück sind üblicherweise über einen Schlauch des Gebläsefiltergeräts miteinander fluidkommunizierend verbunden.

Möglicherweise kontaminierte Luft wird mittels des Gebläsefiltergeräts durch eine Filtervorrichtung, mittels welcher schädliche Stoffe aus der kontaminierten Luft herausfilterbar sind, hindurch angesogen und anschließend über den Schlauch zum Kopfstück an den Benutzer weitergeleitet. Auf diese Weise wird der Benutzer des Gebläsefiltergeräts mit sauberer Atemluft versorgt.

In der Regel umfasst ein übliches Gebläsefiltergerät eine Gebläseeinheit mit einem von einem Motor angetriebenen Lüfterrad und einem Spiralgehäuse. Die zum Betreiben der Gebläseeinheit erforderliche elektrische Energie wird meistens durch einen in einer entsprechenden Aufnahmeeinheit des Gebläsefiltergeräts angeordneten Akkumulator in Form eines Akkupacks bereitgestellt. Mittels eines zentralen Steuergeräts lassen sich Eingaben des Benutzers verarbeiten, und der Motor der Gebläseeinheit lässt sich ansteuern. Ein Gehäuse umschließt im Allgemeinen die Gebläseeinheit, das Steuergerät und den Akkumulator. An das Gehäuse ist mindestens ein Filter anschließbar.

In US 2012/0051904 A1 wird eine kompakte schneckenförmige Gebläseeinheit beschrieben, welche zu einem Atemschutzgerät (powered air purifying respirator) gehört.

Oft wird verlangt, eine Atemschutzvorrichtung mit einem Gebläsefiltergerät in einer explosionsgefährdeten Umgebung einsetzen zu können, beispielsweise in einer Umgebung mit potentiell explosionsfähigen Gasen oder Stäuben. Eine solche Umgebung stellt besondere Ansprüche an die dort verwendeten Geräte. Beim Explosionsschutz müssen zwei Gründe für eine potentielle Zündung ausgeschlossen werden: die Funkenentzündung, zumeist durch die Begrenzung der im Fehlerfall frei werdenden Energie, und eine Temperaturbegrenzung, die die Selbstentzündung ausschließt.

Oft ist das Akkupack entweder direkt im Gebläsefiltergerät integriert oder mittels eines Spezialverschlusses derart mit dem Gebläsefiltergerät gekoppelt, dass ein Wechsel des Akkupacks eines hierfür ausgebildeten Werkzeugs bedarf. Dieses ist darin begründet, dass Gebläsefiltergeräte für die Bereitstellung einer unterbrechungssicheren Funktion hohe Ströme und somit hohe Leistungen benötigen. Die Leistungsaufnahme kann je nach Ausstattung der Geräte beispielsweise Leistungsgrößen um die 20 Watt erfordern.

Diese hohe Leistungsaufnahme erzwingt für die konkrete Schaltungsauslegung einer solchen Einheit, dass das Gebläse, welches die Hauptfunktion der Einheit darstellt, mit hoher Spannung betrieben werden muss.

Bei einem Gebläsefiltergerät mit einem einfach trennbaren Akkupack kommt es aufgrund dieser Anordnung in der Praxis bei Einlegen des Akkupacks oder beim Aktivieren einer gleichwertigen externen Energieversorgung häufig zu einem erheblichen Ausgleichsstrom. Dieser Strom kann unter Umständen einen zweistelligen Ampere-Bereich erreichen.

In DE 102012013656 A1 wird ein Gebläsefiltersystem beschrieben, das für den Einsatz in explosionsgefährdeten Umgebungen geeignet ist. Ein Akkupack mit mehreren Zellen lässt sich elektrisch und lösbar mit einer Gebläseeinheit verbinden. Schutzschaltungen im Akkupack verhindern, dass zu hohe Ströme und/oder zu hohe Temperaturen auftreten.

Diese Schutzschaltungen schalten bei Bedarf einige der Zellen des Akkupacks ab. In DE 19807907 A1 werden ein Verfahren und eine Schaltung vorgestellt, um einen Kurzschluss zu vermeiden, wenn ein elektrisches Gerät, z. B. ein Mobiltelefon, mit einer Stromversorgung verbunden wird. Nach dem Verbinden wird die Spannung der Stromversorgung zunächst über einen Vorwiderstand am Gerät angelegt. Erst wenn die geräteseitige Spannung einen vorgegebenen Wert erreicht hat, wird der Vorwiderstand überbrückt.

DE102013011251 A1 offenbart eine elektronische Schaltung zur Aufladung eines Akkumulators eines Gebläsefiltergerätes, welcher von einer externen elektrischen Energiequelle mit Energie versorgt werden kann. Die elektronische Schaltung umfasst einen ersten Ladeanschluss, der über eine erste elektrische Leitung mit einem Pluspol des Akkumulators verbindbar ist, und einen zweiten Ladeanschluss, der über eine zweite elektrische Leitung mit einem Minuspol des Akkumulators verbindbar ist. Ferner umfasst die elektronische Schaltung, dass in der ersten Leitung oder in der zweiten Leitung wenigstens eine Parallelschaltung aus einem Widerstandselement, insbesondere eine Diode oder ein elektrischer Widerstand mit mindestens 1 Kiloohm, und einem Schaltelement angeordnet ist, sowie eine Messvorrichtung, die ausgebildet ist, einen Ladestrom durch eine der Leitungen oder eine Spannung zwischen den Ladeanschlüssen zu messen und dass zwischen dem Schaltelement und der Messvorrichtung zumindest eine Steuerelektronik vorgesehen ist, die zur Überwachung des Stromflusses durch die Leitungen ausgebildet ist. Dazu kann ein Messsignal, also zu dem Ladestrom oder der Spannung, der Messvorrichtung von der Steuerelektronik empfangen werden. Des Weiteren umfasst die Steuereinheit, dass sie bei einem Fehlen eines Ladestroms das Schaltelement hochohmig oder auf geöffnet schaltet, und dass die Steuerelektronik bei Vorhandensein eines Ladestroms das Schaltelement niederohmig oder auf geschlossen schaltet.

Der Erfindung liegt die Aufgabe zugrunde, ein Gebläsefiltergerät und ein Verfahren zum Betrieb des Gebläsefiltergeräts bereitzustellen, welche einen Einsatz des Gebläsefiltergeräts in explosionsgefährdeten Umgebungen auf andere Weise als bekannte Geräte und Verfahren ermöglichen.

Die Aufgabe wird durch ein Gebläsefiltergerät mit den Merkmalen des Anspruchs 1 und ein Verfahren mit den Merkmalen des Anspruchs 16 gelöst. Vorteilhafte Ausgestaltungen sind in den Unteransprüchen spezifiziert.

Das erfindungsgemäße Gebläsefiltergerät umfasst
- eine Gebläseeinheit,
- eine Filteraufnahme,
- eine interne Energiespeichereinheit,
- eine Energieschnittstelle,
- eine Strombegrenzungs-Vorrichtung,
- eine Sensor-Anordnung und
- ein Steuergerät.

Die interne Energiespeichereinheit ist mit der Gebläseeinheit elektrisch verbunden. Die interne Energiespeichereinheit ist ebenfalls mit der Energieschnittstelle elektrisch verbunden. Die Gebläseeinheit vermag einen Luftstrom zu erzeugen. Die Filteraufnahme vermag eine Filtereinheit aufzunehmen. Das Gebläsefiltergerät ist so ausgestaltet, dass ein von der Gebläseeinheit erzeugte Luftstrom durch eine von der Filteraufnahme aufgenommene Filtereinheit fließt und hierbei gefiltert wird.

Die Energieschnittstelle lässt sich lösbar mit einer Spannungsversorgungseinheit elektrisch verbinden. Diese Spannungsversorgungseinheit ist nicht notwendigerweise ein integraler Bestandteil des Gebläsefiltergeräts. Die Energieschnittstelle lässt sich wieder von dieser Spannungsversorgungseinheit elektrisch trennen.

Die interne Energiespeichereinheit lässt sich mit elektrischer Energie aufladen. Die interne Energiespeichereinheit vermag gespeicherte elektrische Energie wieder abzugeben.

Die Strombegrenzungs-Vorrichtung lässt sich wahlweise aktivieren oder deaktivieren. Die Strombegrenzungs-Vorrichtung ist mindestens dann aktiviert, wenn die Energieschnittstelle von der Spannungsversorgungseinheit getrennt ist.

Die aktivierte Strombegrenzungs-Vorrichtung vermag die Stärke eines Stroms, welcher von der Energieschnittstelle zu der internen Energiespeichereinheit fließt, unterhalb einer vorgegebenen Grenzstromstärke zu halten. Das Steuergerät vermag automatisch die Strombegrenzungs-Vorrichtung zu aktivieren und zu deaktivieren. Bei deaktivierter Strombegrenzungs-Vorrichtung wird die Stärke eines Stroms von der Energieschnittstelle zu der internen Energiespeichereinheit nicht mehr auf die vorgegebenen Grenzstromstärke begrenzt.

Das Steuergerät verarbeitet Signale von der Sensor-Anordnung und deaktiviert die Strombegrenzungs-Vorrichtung, wenn ein vorgegebenes deaktivierendes Ereignis detektiert wurde. Dieses deaktivierende Ereignis ist eines der folgenden Ereignisse:
- Der Ladezustand der internen Energiespeichereinheit hat eine vorgegebene Ladezustands-Schranke überschritten.
- Seit dem Herstellen einer elektrischen Verbindung zwischen der Energieschnittstelle und der Spannungsversorgungseinheit ist eine vorgegebene Zeitschranke verstrichen.

Das Gebläsefiltergerät vermag Umgebungsluft anzusaugen und über eine Filtereinheit in der Filteraufnahme zu filtern und die gefilterte Luft zu einem Benutzer des Gebläsefiltergeräts zu leiten. Die Gebläseeinheit vermag Umgebungsluft anzusaugen und die gefilterte Luft weiterzuleiten.

Erfindungsgemäß umfasst das Gebläsefiltergerät eine aufladbare interne Energiespeichereinheit. Dank dieser internen Energiespeichereinheit ist es nicht erforderlich, das Gebläsefiltergerät dauerhaft mit einer stationären Spannungsversorgungseinheit zu verbinden. Dies ist bei vielen Einsätzen gar nicht möglich. Falls die Energieschnittstelle zeitweise nicht mit einer mobilen Spannungsversorgungseinheit verbunden ist, beispielsweise mit einem Akkupack, so stellt die interne Energiespeichereinheit für einen gewissen Zeitraum sicher, dass die Gebläseeinheit dennoch mit dem benötigten Strom versorgt wird, und zwar unabhängig vom Ladezustand der mobilen Spannungsversorgungseinheit. Dadurch trägt die interne Energiespeichereinheit dazu bei, dass ein stabiler Betrieb der Gebläseeinheit gewährleistet ist.

Das Gebläsefiltergerät lässt sich lösbar mit einer Spannungsversorgungseinheit verbinden. Daher ist eine dauerhafte Verbindung nicht erforderlich. Die Spannungsversorgungseinheit lässt sich austauschen. Dies erhöht den Einsatzbereich des Gebläsefiltergeräts.

Dank der Energieschnittstelle lässt das Gebläsefiltergerät sich lösbar mit einer Spannungsversorgungseinheit verbinden. Möglich, aber dank der Energieschnittstelle und der internen Energiespeichereinheit nicht erforderlich ist es, dass die Spannungsversorgungseinheit ein fester oder integraler Bestandteil des Gebläsefiltergeräts ist. Vielmehr lässt sich im Einsatz die Energieschnittstelle zeitweise mit einer stationären oder mobilen Spannungsversorgungseinheit verbinden und wieder von dieser trennen. Falls eine mobile Spannungsversorgungseinheit verwendet wird, so lässt diese sich austauschen, wenn sie entladen ist. Dank der internen Energiespeichereinheit kann das Gebläsefiltergerät trotzdem für eine gewisse Zeit weiterverwendet werden.

Erfindungsgemäß ist die Strombegrenzungs-Vorrichtung mindestens dann aktiviert, wenn die Energieschnittstelle von der Spannungsversorgungseinheit getrennt ist. Falls nun die Energieschnittstelle mit der Spannungsversorgungseinheit elektrisch verbunden wird, so ist die Strombegrenzungs-Vorrichtung daher zunächst aktiviert und braucht nicht erst als Reaktion auf das Verbinden aktiviert zu werden, was Zeit kosten kann. Sie hält die Stärke eines Stroms von der Energieschnittstelle zur internen Energiespeichereinheit unterhalb einer vorgegebenen Grenzstromstärke. Damit wird auch die Stromstärke von der Spannungsversorgungseinheit zur internen Energiespeichereinheit unterhalb der vorgegebenen Grenzstromstärke gehalten.

Weil diese Grenzstromstärke nicht überschritten wird, wird auch in einer explosionsgefährdeten Umgebung das Risiko ausgeschlossen oder wenigstens signifikant verringert, dass tatsächlich die Gefahr einer Explosion besteht. Insbesondere wird das Risiko ausgeschlossen oder wenigstens verringert, dass ein Lichtbogen auftritt. Weiterhin wird das Risiko verhindert, dass durch eine hohe Stromstärke zu Beginn des Aufladens oder durch einen Lichtbogen elektrische Kontakte der Energieschnittstelle oder der Spannungsversorgungseinheit abbrennen oder anderweitig beschädigt werden. Die Kontakte können daher kleiner dimensioniert sein, als wenn die Stromstärke nicht begrenzt wäre. Insbesondere ist es nicht erforderlich, die elektrischen Kontakte größer als für den Dauerbetrieb erforderlich zu dimensionieren, um eine Dauerfestigkeit zu gewährleisten. Dadurch lassen sich die Herstellungskosten reduzieren, und Platz wird eingespart.

Dank der Strombegrenzung lässt sich die Energieschnittstelle in der explosionsgefährdeten Umgebung mit der Spannungsversorgungseinheit verbinden. Nicht erforderlich ist es, dass ein Benutzer die explosionsgefährdete Umgebung zeitweise verlässt, um z.B. um die Spannungsversorgungseinheit auszutauschen oder um die interne Energiespeichereinheit aufzuladen, und danach wieder in die explosionsgefährdete Umgebung zurückkehrt. Somit vergrößert die Erfindung die effektive erzielbare Einsatzdauer des Gebläsefiltergeräts.

Der Strom von der Spannungsversorgungseinheit lädt die interne Energiespeichereinheit des Gebläsefiltergeräts auf. Dadurch verändert sich der Ladezustand der internen Energiespeichereinheit. Der Sensor detektiert erfindungsgemäß das vorgegebene deaktivierende Ereignis. Wenn dieses Ereignis eingetreten ist, ist die interne Energiespeichereinheit ausreichend stärker aufgeladen als zu Beginn des Aufladens. Daher besteht dann nicht mehr das Risiko einer Explosion. Der Strom braucht nicht mehr durch die Strombegrenzungs-Vorrichtung auf die Grenzstromstärke reduziert zu werden, sondern bleibt dank des höheren Ladezustands auch ohne apparative Begrenzung unter der Grenzstromstärke. Weil dann ein Strom einer höheren Stromstärke fließen kann, wird die interne Energiespeichereinheit rascher aufgeladen. Dies spart - verglichen mit einer dauerhaften Strombegrenzung - Zeit ein. Das Gebläsefiltergerät ist rascher wieder voll einsatzfähig.

In einer Alternative der Erfindung ist das deaktivierende Ereignis dann eingetreten, wenn der Ladezustand die Ladezustands-Schranke überschritten hat. Um dies festzustellen, reicht es aus, lokal eine Größe zu messen, die mit dem Ladezustand korreliert. Möglich, aber dank der Erfindung nicht erforderlich ist es, eine Spannung an der Energieschnittstelle oder eine Stromstärke zu messen.

In einer anderen Alternative der Erfindung ist das deaktivierende Ereignis dann eingetreten, wenn seit dem Verbinden eine vorgegebene Zeitspanne verstrichen ist. Diese Alternative kommt mit besonders einfachen Sensoren aus: mit einem Sensor, der das Herstellen der Verbindung detektiert, und einer Uhr.

Die erfindungsgemäß erzielte Wirkung, dass die Stromstärke nur solange begrenzt wird, bis das deaktivierende Ereignis detektiert wird, hat zusätzlich in vielen Fällen folgenden Vorteil gegenüber einer dauerhaften Strombegrenzung: Die Strombegrenzung führt in vielen Fällen dazu, dass elektrische Leistung für das oder ein Bauteil, das die Stromstärkenbegrenzung bewirkt, verbraucht wird. Diese Leistung steht nicht mehr als Nutzleistung zur Verfügung. Weil die Strombegrenzung nur solange durchgeführt wird, bis das deaktivierende Ereignis detektiert wird, tritt die Verlustleistung nur für eine begrenzte und in der Regel sehr kurze Zeitspanne auf. Die Erfindung erhöht also die Einsatzdauer des Gebläsefiltergeräts. Außerdem führt die Verlustleistung zu einer Erwärmung, was oft unerwünscht ist. Auch daher ist es sinnvoll, die Strombegrenzung nur für eine gewisse Zeit durchzuführen, nämlich solange wie erforderlich.

Die erfindungsgemäße Begrenzung der Stromstärke stellt keine speziellen Anforderungen an die Spannungsversorgungseinheit. Vielmehr wird die Begrenzung unabhängig von der Spannungsversorgungseinheit innerhalb des Gebläsefiltergeräts durchgeführt. Erfindungsgemäß wird bei aktivierter Strombegrenzungs-Vorrichtung die Stromstärke von der Energieschnittstelle zu der internen Energiespeichereinheit begrenzt. Somit erspart die Erfindung die Notwendigkeit, eine spezielle Spannungsversorgungseinheit bereitstellen zu müssen, die für den Einsatz in einer explosionsgefährdeten Umgebung geeignet ist. Insbesondere ist nicht erforderlich, die Spannungsversorgungseinheit von außen ansteuern zu müssen oder einzelne Zellen der Spannungsversorgungseinheit abschalten zu müssen oder sicherzustellen, dass die Spannungsversorgungseinheit zeitweise nur Strom mit begrenzter Stromstärke bereitstellt. Somit stellt das erfindungsgemäße Gebläsefiltergerät geringere Anforderungen an die Spannungsversorgungseinheit als bekannte Gebläsefiltergeräte, die ebenfalls für explosionsgefährdete Umgebungen geeignet sind.

Die Grenzstromstärke lässt sich so festlegen, dass bei einer Stromstärke unterhalb der Grenzstromstärke gewährleistet ist, dass das Gebläsefiltergerät in einer explosionsgefährdeten Umgebung gefahrlos betrieben werden kann. Insbesondere lässt sich verhindern, dass sich ein Lichtbogen oder Funken bilden.

Die Detektion des deaktivierenden Ereignisses hängt von mindestens einem Signal der Sensor-Anordnung ab. Die Auswertung umfasst beispielsweise einen Vergleich eines Signals oder eines zeitlichen Verlaufs mit einem vorgegebenen Schwellenwert.

In einer Ausgestaltung umfasst die Sensor-Anordnung einen Spannungs-Sensor. Dieser Spannungs-Sensor vermag eine Größe zu messen, die mit der aktuellen elektrischen Ausgangsspannung oder der aktuellen Ladespannung der internen Energiespeichereinheit korreliert. Diese gemessene Spannung korreliert daher auch mit dem Ladezustand der internen Energiespeichereinheit. Das deaktivierende Ereignis ist gemäß dieser Ausgestaltung eingetreten, wenn diese gemessene Spannung oberhalb einer vorgegebenen Spannungsschranke liegt. Bevorzugt liegt die Ladezustands-Schranke zwischen 80 % und 95 % des vollständig aufgeladenen Zustands, besonders bevorzugt bei etwa 85 %. Falls der Ladezustand oberhalb dieser Ladezustands-Schranke liegt, so kann der Strom von der Stromversorgungseinheit über die Energieschnittstelle zu der internen Energiespeichereinheit nicht mehr oberhalb der Grenzstromstärke liegen.

In einer anderen Ausgestaltung umfasst die Sensor-Anordnung einen Verbindungs-Sensor und einen Zeitspannen-Sensor. Der Verbindungs-Sensor vermag das Ereignis zu detektieren, dass die Spannungsversorgungseinheit mit der Energieschnittstelle elektrisch verbunden ist. Beispielsweise erzeugt der Verbindungs-Sensor ein Signal, wenn er detektiert hat, dass eine Verbindung hergestellt ist, und / oder dann, wenn er detektiert hat, dass keine Verbindung hergestellt ist. Der Verbindungs-Sensor kann beispielsweise ein mechanischer Sensor, ein optischer Sensor, ein Spannungs-Sensor oder ein sonstiger elektrischer Sensor sein. Der Zeitspannen-Sensor vermag die Zeitspanne zu messen, die seit dem Herstellen einer elektrischen Verbindung zwischen der Energieschnittstelle und der Spannungsversorgungseinheit verstrichen ist. In vielen Anwendungen reicht es aus, wenn diese Zeitspanne unter 1 Sekunde liegt, besonders bevorzugt zwischen 0,1 und 0,5 Sekunden.

Diese beiden Ausgestaltungen lassen sich kombinieren. Das Steuergerät vermag auf unterschiedliche Weise Signale von den Sensoren der Sensor-Anordnung auszuwerten und / oder zu kombinieren, um das deaktivierende Ereignis zu detektieren. Beispielsweise deaktiviert das Steuergerät die Strombegrenzungs-Vorrichtung dann, wenn sowohl der Ladezustand die Ladezustands-Schranke überschritten hat als auch die Zeitspanne verstrichen ist. Diese Ausgestaltung führt zu einer Redundanz und einer erhöhten Betriebssicherheit. Möglich ist auch, dass das Steuergerät die Strombegrenzungs-Vorrichtung beim Auftreten des zeitlich früheren Ereignisses deaktiviert, also dann deaktiviert, wenn der Ladezustand die Ladezustands-Schranke überschritten hat, spätestens aber nach Verstreichen der Zeitspanne. Diese Ausgestaltung spart Zeit ein.

Möglich ist, dass das Gebläsefiltergerät wahlweise in einem ersten Modus, in dem beide Ereignisse eingetreten sein müssen, und einem zweiten Modus, in dem das zeitlich frühere Ereignis eingetreten sein muss, betrieben wird.

Verschiedene Ausgestaltungen sind möglich, wie die Strombegrenzungs-Vorrichtung ausgestaltet ist. In einer Ausgestaltung umfasst die Strombegrenzungs-Vorrichtung eine Strombegrenzungseinheit und eine schaltbare elektrische Verbindungseinheit. Die schaltbare elektrische Verbindungseinheit ist parallel zur Strombegrenzungseinheit angeordnet und lässt sich wahlweise in einen Durchleitungszustand oder in einen Sperrzustand verbringen. Im Durchleitungszustand verbindet die Verbindungseinheit die Energieschnittstelle mit der internen Energiespeichereinheit und hat bevorzugt einen geringeren elektrischen Widerstandswert als die Strombegrenzungseinheit. Die Verbindungseinheit im Durchleitungszustand umgeht daher die Strombegrenzungseinheit. Im Sperrzustand unterbricht die Verbindungseinheit diese Verbindung, denn sie hat einen größeren Widerstandswert als die Strombegrenzungseinheit, bevorzugt einen praktisch unendlich großen Widerstandswert.

Das Steuergerät vermag die Verbindungseinheit anzusteuern. Wenigstens dann, wenn die Energieschnittstelle von der Spannungsversorgungseinheit getrennt ist, ist die Verbindungseinheit im Sperrzustand. Nachdem das Steuergerät das deaktivierende Ereignis detektiert hat, schaltet das Steuergerät das Verbindungselement aus dem Sperrzustand in den Durchleitungszustand. Dadurch wird die Strombegrenzungs-Vorrichtung umgangen und dadurch deaktiviert. In dieser Ausgestaltung umfasst der Schritt, die Strombegrenzungs-Vorrichtung zu deaktivieren, also den Schritt, die Strombegrenzungseinheit dadurch zu umgehen, dass die Verbindungseinheit in den Durchleitungszustand geschaltet wird.

Diese Ausgestaltung erspart die Notwendigkeit, die Strombegrenzungseinheit selber als ein ansteuerbares Bauteil auszugestalten. Vielmehr kann die Strombegrenzungseinheit stets im gleichen Zustand verbleiben und wird dadurch deaktiviert, dass sie umgangen wird. Auch die Verbindungseinheit kann einfach ausgestaltet sein, z.B. als Schalter mit mindestens zwei möglichen Zuständen.

In einer Ausgestaltung umfasst die elektronische Verbindungseinheit mindestens einen Schalter und / oder eine Zweirichtungs-Thyristordiode und / oder eine Zweirichtungs-Diode und / oder einen Transistor und oder einen Relais und / oder einen mechanischen Kontakt und oder eine Funkenstrecke.

In einer Ausgestaltung umfasst die Strombegrenzungs-Vorrichtung mindestens einen Ohmschen Widerstand und / oder eine Induktivität und / oder einen teilweise aufgesteuerten Transistor. Diese elektronischen Bauteile sind alleine sowie in Kombination miteinander dafür geeignet, die Stärke eines elektrischen Stroms zu begrenzen. Außerdem sind diese elektronischen Bauteile kostengünstig verfügbar und haben in der Regel ein nur geringes Gewicht und einen nur geringen Platzbedarf.

In einer bevorzugten Ausgestaltung umfasst die Strombegrenzungs-Vorrichtung ein ansteuerbares elektronisches Bauteil. Dieses elektronische Bauteil weist einen veränderbaren elektrischen Widerstand auf. Im aktivierten Zustand ist der Widerstand dieses Bauteils größer als im deaktivierten Zustand. Nachdem das Steuergerät das deaktivierende Ereignis detektiert hat, reduziert das Steuergerät den elektrischen Widerstand dieses Bauteils und überführt die Strombegrenzungs-Vorrichtung dadurch vom aktivierten in den deaktivierten Zustand.

In einer Ausgestaltung lässt sich der elektrische Widerstandwert sprunghaft reduzieren, z.B. durch Umschalten, was oft mit besonders einfachen Mitteln und kostengünstig realisierbar ist. In einer anderen Ausgestaltung lässt der Widerstandwert sich gradierend oder kontinuierlich oder schrittweise reduzieren. Dies hat den Vorteil, dass die Stromstärke des Stromflusses zur internen Energiespeichereinheit sich besonders präzise steuern oder regeln lässt. Möglich ist, dass der elektrische Widerstandswert abhängig vom ansteigenden Ladezustand der internen Energiespeichereinheit oder der verstrichenen Zeit schrittweise oder gradierend reduziert wird. Dadurch wird erreicht, die interne Energiespeichereinheit rasch aufzuladen, ohne dass eine zu hohe Stromstärke bewirkt wird. Möglich ist, die Stromstärke abhängig vom Ladezustand zu regeln, wobei eine maximal zulässige Stromstärke die Führungsgröße, die tatsächliche Stromstärke die Regelgröße, der einstellbare Widerstandswert die oder eine Stellgröße und der Ladezustand eine Störgröße ist.

In einer Fortbildung der Ausgestaltung mit dem ansteuerbaren elektronischen Bauteil umfasst das elektronische Bauteil einen Transistor. Das Steuergerät vermag diesen Transistor so anzusteuern, dass der Transistor wahlweise teilweise aufsteuerbar oder voll aufsteuerbar ist. Der elektrische Widerstandswert des teilweise aufgesteuerten Transistors ist größer als der elektrische Widerstandwert des voll aufgesteuerten Transistors. Nach dem Detektieren des deaktivierenden Ereignisses versetzt das Steuergerät den Transistor in den voll aufgesteuerten Zustand. Diese Ausgestaltung erspart die Notwendigkeit, ein zusätzliches Bauteil vorzusehen, welches nach dem Detektieren des deaktivierenden Ereignisses verwendet wird. Vielmehr lässt sich die Strombegrenzungs-Vorrichtung mithilfe eines einzigen ansteuerbaren Bauteils realisieren.

Erfindungsgemäß ist die Strombegrenzungs-Vorrichtung mindestens dann aktiviert, wenn die Energieschnittstelle elektrisch von der Spannungsversorgungseinheit getrennt ist. In einer Ausgestaltung aktiviert das Steuergerät automatisch die Strombegrenzungs-Vorrichtung als Reaktion auf den Vorgang, dass das Steuergerät das Ereignis detektiert hat, dass die Energieschnittstelle von der Spannungsversorgungseinheit getrennt ist.

In einer Ausgestaltung umfasst das Gebläsefiltergerät eine weitere Energieschnittstelle, welche sich mit einer weiteren Spannungsversorgungseinheit elektrisch verbinden lässt und parallel zu der (ersten) Energieschnittstelle angeordnet ist. Die beiden Energieschnittstellen können für die Verbindung mit gleichartigen oder mit unterschiedlichen Spannungsversorgungseinheiten ausgestaltet sein. Das Gebläsefiltergerät lässt sich daher wahlweise gleichzeitig mit zwei gleichartigen oder mit zwei unterschiedlichen Spannungsversorgungseinheiten oder mit nur einer Spannungsversorgungseinheit verbinden. Bevorzugt umfasst das Gebläsefiltergerät eine weitere Strombegrenzungs-Vorrichtung, die der weiteren Energieschnittstelle zugeordnet ist und die mindestens dann aktiviert ist, wenn die weitere Energieschnittstelle von der weiteren Spannungsversorgungseinheit getrennt ist. Das Steuergerät vermag die weitere Strombegrenzungs-Vorrichtung unabhängig von der Strombegrenzungs-Vorrichtung zu deaktivieren, nämlich wenn ein weiteres deaktivierendes Ereignis detektiert ist. Dieses weitere deaktivierende Ereignis ist eingetreten, wenn der Ladezustand die Ladezustands-Schranke überschritten hat und/oder wenn seit dem Herstellen einer elektrischen Verbindung zwischen der weiteren Energieschnittstelle und der weiteren Spannungsversorgungseinheit die vorgegebene oder eine weitere vorgegebene Zeitschranke verstrichen ist.

Möglich ist auch, dass dieselbe Strombegrenzungs-Vorrichtung mit beiden Energieschnittstellen verbunden ist. Möglich ist weiterhin, dass das Steuergerät die Strombegrenzungs-Vorrichtung wahlweise mit der ersten oder mit der weiteren Energieschnittstelle oder mit beiden Energieschnittstellen elektrisch verbindet, und zwar abhängig davon, welche Energieschnittstelle abhängig mit einer Spannungsversorgungseinheit verbunden ist und welche nicht.

In der Regel lässt sich die Gebläseeinheit einschalten und ausschalten und lässt sich daher wahlweise in einen eingeschalteten oder einen ausgeschalteten Zustand versetzen. Vorzugsweise kann ein Benutzer ein Betätigungselement betätigen und dadurch die Gebläseeinheit einschalten und wieder ausschalten. Wenn die Gebläseeinheit ausgeschaltet ist, ist es jederzeit möglich, dass sie wieder eingeschaltet wird.

In einer Ausgestaltung aktiviert das Gebläsefiltergerät automatisch die Strombegrenzungs-Vorrichtung als Reaktion darauf, dass die Gebläseeinheit eingeschaltet wird und / oder ausgeschaltet wird. Diese Ausgestaltung begrenzt die Stromstärke, die beim Einschalten bzw. Ausschalten der Gebläseeinheit auftreten kann, und zwar insbesondere dann, wenn beim Einschalten der Gebläseeinheit die Energieschnittstelle mit der Spannungsversorgungseinheit elektrisch verbunden ist. Bevorzugt stellt diese Ausgestaltung sicher, dass bei ausgeschalteter Gebläseeinheit automatisch die Strombegrenzungs-Vorrichtung aktiviert ist oder wird.

In einer Realisierung dieser Ausgestaltung aktiviert das Steuergerät automatisch die Strombegrenzungs-Vorrichtung als Reaktion darauf, dass die Gebläseeinheit eingeschaltet oder wieder ausgeschaltet wird. In einer anderen Realisierung ist das Betätigungselement für die Gebläseeinheit mit einer elektrischen Verbindung zwischen der Energieschnittstelle und der Strombegrenzungs-Vorrichtung verbunden. Solange die Gebläseeinheit ausgeschaltet ist, ist die Energieschnittstelle elektrisch von der Strombegrenzungs-Vorrichtung und von der internen Energiespeichereinheit getrennt. Sobald die Gebläseeinheit mittels des Betätigungselements eingeschaltet wird, wird die Energieschnittstelle elektrisch mit der Strombegrenzungs-Vorrichtung verbunden. Bevorzugt wird dadurch die interne Energiespeichereinheit aufgeladen. Diese Ausgestaltung stellt sicher, dass beim Einschalten der Gebläseeinheit die Stromstärke begrenzt wird, ohne dass das Steuergerät eingreifen muss.

Die Spannungsversorgungseinheit kann eine stationäre Einheit sein. In einer bevorzugten Ausgestaltung umfasst das Gebläsefiltergerät hingegen eine Aufnahmeeinheit. Eine mobile Spannungsversorgungseinheit lässt sich in diese Aufnahmeeinheit einführen, beispielsweise einschieben, und wieder aus der Aufnahmeeinheit entnehmen. Nach dem Einführen ist die mobile Spannungsversorgungseinheit elektrisch mit der Energieschnittstelle verbunden. Ein autonom betreibbares Gebläsefiltersystem wird bereitgestellt. Diese Ausgestaltung ermöglicht es, das Gebläsefiltersystem, also das Gebläsefiltergerät mitsamt der mobilen Spannungsversorgungseinheit, zu einem gewünschten Einsatzort zu transportieren und dort zu verwenden. Dank der Aufnahmeeinheit lässt sich die mobile

Spannungsversorgungseinheit rasch austauschen. In vielen Fällen ist es nicht erforderlich, ein Gehäuse des Gebläsefiltergeräts zu öffnen, um an die mobile Spannungsversorgungseinheit zu kommen.

Bevorzugt ist die mobile Spannungsversorgungseinheit wieder aufladbar, ist beispielsweise als Akkupack ausgestaltet. Vorzugsweise schirmt das Gebläsefiltergerät eine mobile Spannungsversorgungseinheit in der Aufnahmeeinheit gegen die Umgebung hin ab und schützt die eingesetzte Spannungsversorgungseinheit vor äußeren Einflüssen, insbesondere vor hohen oder niedrigen Temperaturen, Feuer, Wasser, Schmutz, schädlichen Chemikalien, mechanischen Belastungen. Möglich ist auch, dass die Aufnahmeeinheit die mobile Spannungsversorgungseinheit an der Außenseite eines Gehäuses des Gebläsefiltergeräts hält. Vorzugsweise hält ein Schnellverschlussmittel die mobile Spannungsversorgungseinheit in oder an der Aufnahmeeinheit und verhindert, dass die Spannungsversorgungseinheit unbeabsichtigt von der Energieschnittstelle getrennt wird.

In einer bevorzugten Ausgestaltung ist die Energieschnittstelle in oder an der Aufnahmeeinheit angeordnet. Falls die Spannungsversorgungseinheit vollständig in die Aufnahmeeinheit eingeführt ist, so ist die Spannungsversorgungseinheit elektrisch mit der Energieschnittstelle gekoppelt. Die Energieschnittstelle lässt sich bei entnommener Spannungsversorgungseinheit von außen reinigen.

Das Gebläsefiltergerät kann weitere Bestandteile umfassen, beispielsweise einen Atemluftschlauch, um Atemluft durchzuleiten, eine Gesichtsmaske, eine Haube und / oder ein Mundstück. Die Filteraufnahme kann bevorzugt nacheinander mehrere Filtereinheiten aufnehmen, auch unterschiedliche Filtereinheiten. Die Filteraufnahme kann dazu ausgestaltet sein, gleichzeitig oder nacheinander unterschiedliche Filtereinheiten aufzunehmen.

Bevorzugt umfasst die Gebläseeinheit, welche Umgebungsluft anzusaugen und gefilterte Luft weiterzuleiten vermag, einen Motor und ein Lüfterrad. Der Motor vermag das Lüfterrad in Rotation zu versetzen. Bevorzugt umfasst die Gebläseeinheit außerdem ein Spiralgehäuse, welche das Lüfterrad umgibt und den Luftstrom durchleitet, und / oder einen Umrichter für den Motor.

Erfindungsgemäß umfasst das Gebläsefiltergerät eine interne Energiespeichereinheit. In einer Ausgestaltung umfasst diese interne Energiespeichereinheit mindestens einen Kondensator. Ein Kondensator hat den Vorteil, dass ein Kondensator sich relativ schnell aufladen lässt und zuverlässig ausreichende elektrische Energie zu speichern und abzugeben vermag, wobei die abgegebene elektrische Energie einen stabilen Betrieb der Gebläseeinheit gewährleistet. Möglich ist auch, dass die interne Energiespeichereinheit mindestens einen in das Gerät eingebauten Akkumulator umfasst.

Erfindungsgemäß umfasst das Gebläsefiltergerät ein Steuergerät, welches nach dem Detektieren des deaktivierenden Ereignisses die Strombegrenzungs-Vorrichtung deaktiviert. Dieses Steuergerät ist vorzugsweise innerhalb eines Gehäuses angeordnet, wobei vorzugsweise die übrigen Bestandteile des Gebläsefiltergeräts ebenfalls von diesem Gehäuse geschützt sind und die Energieschnittstelle an diesem Gehäuse angeordnet ist.

Sämtliche aus den Ansprüchen, der Beschreibung oder den Zeichnungen hervorgehende Merkmale und oder Vorteile, einschließlich konstruktiver Einzelheiten und räumlicher Anordnungen, können sowohl für sich als auch in den verschiedenen Kombinationen erfindungswesentlich sein.

Im Folgenden wird die Erfindung anhand eines Ausführungsbeispiels beschrieben. Hierbei zeigen schematisch
- Figur 1: einen Aufbau einer Ausführungsform eines erfindungsgemäßen Gebläsefiltergeräts;
- Figur 2: eine beispielhafte Ausgestaltung einer Schaltungs-Anordnung zur Strombegrenzung;
- Figur 3: mit Hilfe eines Flussdiagramm die Schritte eines beispielhaften Ablaufs, der beim Betrieb des Gebläsefiltergeräts durchgeführt wird;
- Figur 4: eine erste mögliche Ausgestaltung, wann das deaktivierende Ereignis detektiert ist;
- Figur 5: eine mögliche alternative Ausgestaltung, wann das deaktivierende Ereignis detektiert ist.

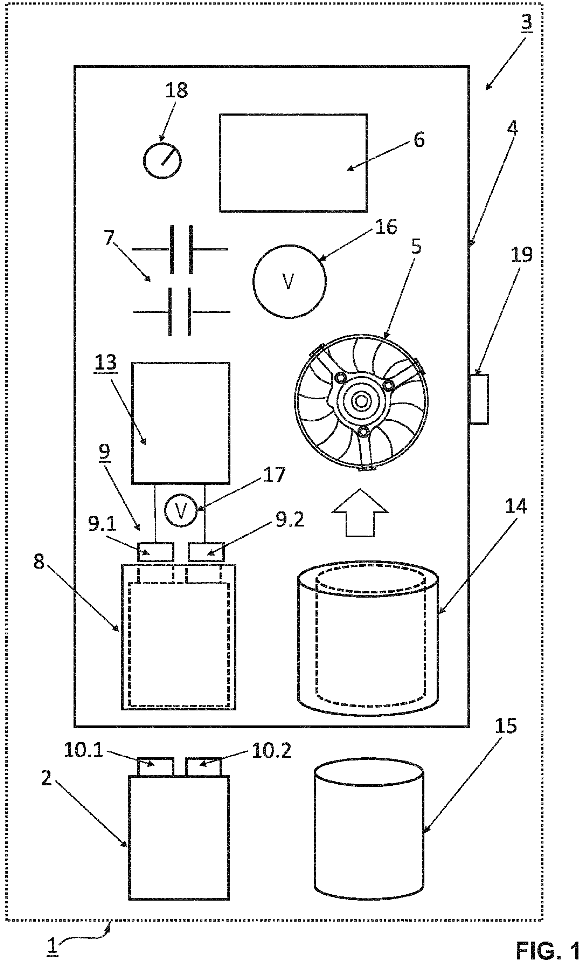

Figur 1 zeigt beispielhaft, wie ein erfindungsgemäßes Gebläsefiltergerät 3 aufgebaut sein kann. In einem Gehäuse 4 sind folgende Bestandteile angeordnet:
- eine Gebläseeinheit 5, welche ein Lüfterrad, einen Elektromotor und einen nicht gezeigten DC/AC-Umrichter für den Elektromotor umfasst,
- ein Betätigungselement 19, mit dem ein Benutzer die Gebläseeinheit 5 einschalten und ausschalten kann,
- eine Filteraufnahme 14, welche eine Filterpatrone 15 aufzunehmen vermag,
- eine interne Energiespeichereinheit 7, welche im Ausführungsbeispiel zwei Kondensatoren umfasst,
- eine Aufnahmeeinheit 8, welche eine mobile Spannungsversorgungseinheit in Form eines Akkupacks 2 aufzunehmen vermag,
- eine Energieschnittstelle 9 mit zwei elektrischen Kontaktstellen 9.1, 9.2,
- einen Spannungs-Sensor 16, der die aktuelle Ladespannung der internen Energiespeichereinheit 7 zu messen vermag,
- einen Verbindungs-Sensor 17, der feststellen vermag, ob ein Akkupack 2 in die Aufnahmeeinheit 8 eingesetzt ist oder nicht und der im Ausführungsbeispiel ebenfalls als Spannungs-Sensor ausgestaltet ist,
- einen Zeitspannen-Sensor in Form einer Systemuhr 18, welche die Zeitspanne zu messen vermag, welche seit einem Ereignis, z.B. seit dem Einsetzen eines Akkupacks 2 in die Aufnahmeeinheit 8, verstrichen ist,
- eine Strombegrenzungs-Schaltung 13, welche weiter unten beschrieben wird, und
- ein Steuergerät 6, welches Signale von dem Spannungs-Sensor 16, dem Verbindungs-Sensor 17 und einem nicht gezeigten Sensor für die Feststellung, ob die Gebläseeinheit 5 eingeschaltet oder ausgeschaltet ist, erhält und die Strombegrenzungs-Schaltung 13 anzusteuern vermag.

Die Gebläseeinheit 5 vermag mithilfe des Lüfterrads aus der Umgebung Luft anzusaugen und dadurch einen Luftstrom zu erzeugen. Dieser Luftstrom fließt durch die eingesetzte Filterpatrone 5 und wird hierbei gereinigt. Der gereinigte Luftstrom steht einem nicht gezeigten Benutzer des Gebläsefiltergeräts 3 zur Verfügung. Bevorzugt wird der Luftstrom durch einen Atemluftschlauch zu einer Gesichtsmaske geleitet. Der Benutzer kann die Gebläseeinheit 5 einschalten und wieder ausschalten, und zwar mithilfe des Betätigungselements 19.

Das Akkupack 2 umfasst zwei elektrische Kontaktstellen (Terminals) 10.1 und 10.2. In Figur 1 ist das Akkupack 2 einmal außerhalb der Aufnahmeeinheit 8 mit durchgezogenen Linien dargestellt und einmal mit gestrichelten Linien in einer Position, in der das Akkupack 2 in die Aufnahmeeinheit 8 eingesetzt ist. In dieser eingesetzten Position kontaktieren die Kontaktstellen 10.1 und 10.2 des Akkupacks 2 die korrespondierenden Kontaktstellen 9.1 und 9.2 der Energieschnittstelle 9. Die Filterpatrone 15 ist einmal mit durchgezogenen Linien in einer Position außerhalb der Filteraufnahme 14 dargestellt und einmal mit gestrichelten Linien in einer Position, in der die Filterpatrone 15 in die Filteraufnahme 14 eingesetzt ist.

Die Gebläseeinheit 5 wird bevorzugt nicht direkt vom Akkupack 2 versorgt. Vielmehr lädt der Akkupack 2 über die Energieschnittstelle 9 die interne Energiespeichereinheit 7 auf, und die interne Energiespeichereinheit 7 versorgt die Gebläseeinheit 5.

Ein Gebläsefiltersystem 1 lässt sich von einem Benutzer tragen, z.B. an einem Gürtel oder wie ein Rucksack, und umfasst
- das Gebläsefiltergerät 3,
- den Akkupack 2 in der Aufnahmeeinheit 8 und
- die Filterpatrone 15 in der Filteraufnahme 14.

Die Strombegrenzungs-Schaltung 13 ist mit der internen Energiespeichereinheit 7 dauerhaft elektrisch verbunden. Die Strombegrenzungs-Schaltung 13 lässt sich von dem Steuergerät 6 ansteuern und wahlweise in einen aktivierten und in einen deaktivierten Zustand verbringen. Im aktivierten Zustand begrenzt die Strombegrenzungs-Schaltung 13 die Stromstärke von der Energieschnittstelle 9 zu der internen Energiespeichereinheit 7 auf eine vorgegebene Stromstärken-Schranke. Wenn die Strombegrenzungs-Schaltung 13 deaktiviert ist, so kann die Stromstärke oberhalb dieser Stromstärken-Schranke liegen.

Die interne Energiespeichereinheit 7 ist dauerhaft mit der Gebläseeinheit 5 elektrisch verbunden. Falls das Akkupack 2 in die Aufnahmeeinheit 8 eingesetzt ist und die Kontaktstellen 10.1 und 10.2 die korrespondierenden Kontaktstellen 9.1 und 9.2 kontaktieren, so ist der Akkupack 2 über die Schaltung 13 mit der internen Energiespeichereinheit 7 elektrisch verbunden. Das Akkupack 2 lädt die interne Energiespeichereinheit 7 elektrisch auf.

Die interne Energiespeichereinheit 7 vermag die Gebläseeinheit 5 für einen gewissen Zeitraum auch dann elektrisch zu versorgen, falls das Akkupack 2 verbraucht oder nicht in die Aufnahmeeinheit 8 eingesetzt ist. Dadurch ist es möglich, bei laufender Gebläseeinheit 5 das Akkupack 2 auszuwechseln, auch im laufenden Betrieb. Nicht erforderlich ist es, für den Austausch eine gefährliche Umgebung zu verlassen.

Im Ausführungsbeispiel vermag der Verbindungs-Sensor 17 die Spannung zwischen den beiden Kontaktstellen 9.1 und 9.2 zu messen. Das Steuergerät 6 vermag die Signale auszuwerten und automatisch zwischen folgenden drei Situationen zu unterscheiden:
- In die Aufnahmeeinheit 8 ist kein Akkupack 2 eingesetzt.
- Das in die Aufnahmeeinheit 8 eingesetzte Akkupack 2 ist entladen und muss ausgetauscht werden.
- Das in die Aufnahmeeinheit 8 eingesetzte Akkupack 2 liefert ausreichende Spannung.

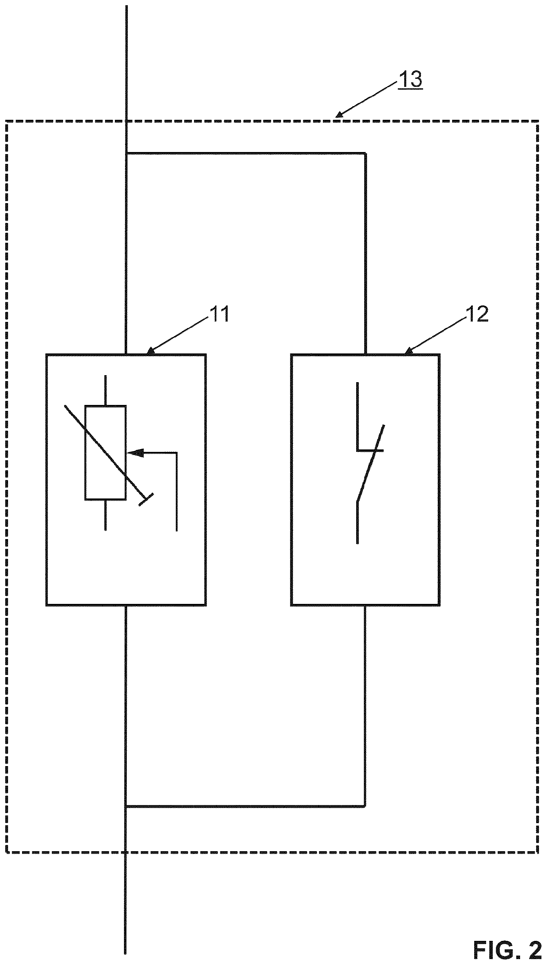

Figur 2 zeigt beispielhaft die Strombegrenzungs-Schaltung 13. Diese Schaltung 13 umfasst eine Strombegrenzungseinheit 11 und eine schaltbare elektrische Verbindungseinheit 12, welche parallel zur Strombegrenzungseinheit 11 angeordnet ist. Die Verbindungseinheit 12 lässt sich ansteuern und dadurch wahlweise in einen Durchleitungszustand oder in einen Sperrzustand bringen. Im Ausführungsbeispiel umfasst die Strombegrenzungseinheit 11 ein ansteuerbares Potentiometer, hat also einen variablen elektrischen Widerstandswert. Der kleinstmögliche elektrische Widerstandswert der Strombegrenzungseinheit 11 ist größer als der elektrische Widerstandswert der schaltbaren elektrischen Verbindungseinheit 12 in dem Durchleitungszustand. Im Sperrzustand ist der elektrische Widerstandswert der Verbindungseinheit 12 um ein Vielfaches größer als der oder der maximale Widerstandswert der Strombegrenzungseinheit 11, beispielsweise praktisch unendlich. Das Steuergerät 6 vermag sowohl die Strombegrenzungseinheit 11 als auch die Verbindungseinheit 12 anzusteuern. Wenn die Verbindungseinheit 12 im Sperrzustand ist, so ist die Stromstärke, die durch die Strombegrenzungs-Schaltung 13 fließt, auf eine vorgegebene Stromstärken-Schranke begrenzt. Möglich ist auch, dass die Strombegrenzungseinheit 11 einen festen Widerstandswert aufweist und nicht ansteuerbar ist.

Möglich ist auch, dass die Strombegrenzungseinheit 11 nicht von einer schaltbaren elektrischen Verbindungseinheit 12 umgangen wird. In diese Ausgestaltung wird die Strombegrenzungs-Schaltung 13 bevorzugt dadurch deaktiviert, dass ihr elektrischer Widerstandswert reduziert wird.

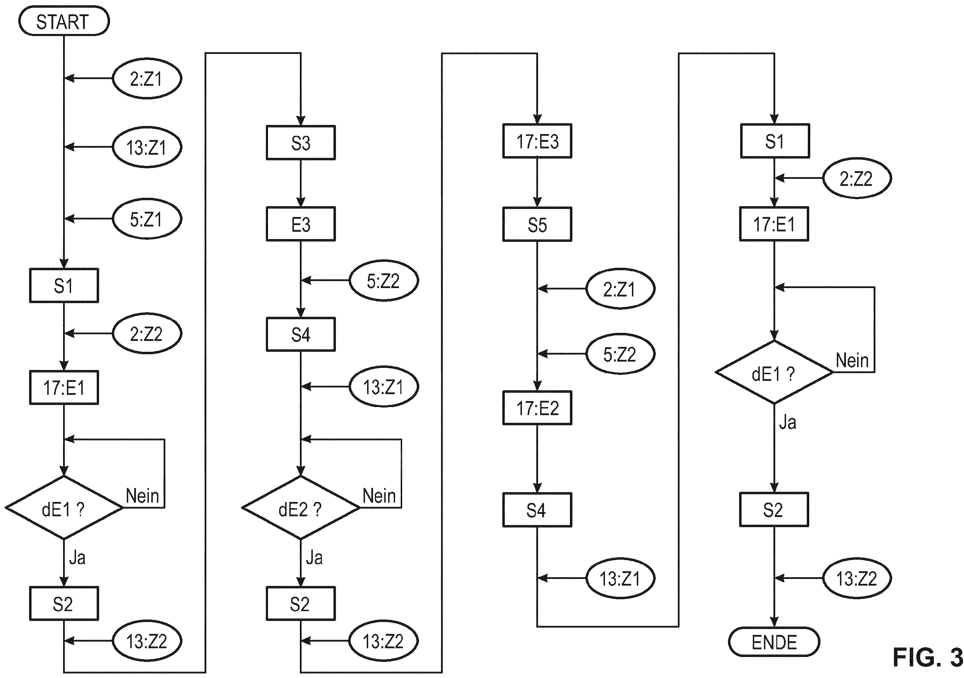

Figur 3 zeigt beispielhaft ein Flussdiagramm, wie das Gebläsefiltergerät 3 betrieben wird. Vor der Benutzung befindet sich das Gebläsefiltergerät 3 im folgenden Zustand:
- Die Energieschnittstelle 9 ist nicht mit einem Akkupack 2 verbunden (Zustand 2:Z1).
- Die Strombegrenzungs-Schaltung 13 ist im aktivierten Zustand (Zustand 13:Z1).
- Die Gebläseeinheit 5 ist ausgeschaltet (Zustand 5:Z1).

Anschließend werden folgende Schritte durchgeführt:
- Der Benutzer setzt ein Akkupack 2 in die Aufnahmeeinheit 8 ein (Schritt S1). Dadurch ist eine elektrische Verbindung zwischen dem Akkupack 2 und der Energieschnittstelle 9 hergestellt. Das Akkupack 2 ist dadurch mit der internen Energiespeichereinheit 7 elektrisch verbunden und lädt diese auf.
- Der Verbindungs-Sensor 17 liefert ein Signal, dass das Akkupack 2 mit der Energieschnittstelle 9 elektrisch verbunden ist (Ereignis 17:E1).
- Das Steuergerät 6 prüft, ob das erste deaktivierende Ereignis eingetreten ist (Prüfung dE1?).
- Sobald dies der Fall ist (Zweig Ja), deaktiviert das Steuergerät 6 die Strombegrenzungs-Schaltung 13 (Schritt S2). Die Strombegrenzungs-Schaltung 13 ist nunmehr im deaktivierten Zustand (Zustand 13:Z2).
- Der Benutzer betätigt das Betätigungselement 19 für die Gebläseeinheit 5 und schaltet die Gebläseeinheit 5 dadurch ein (Schritt S3). Die Gebläseeinheit 5 befindet sich nunmehr im eingeschalteten Zustand (Zustand 5:Z2).
- Ein nicht gezeigter Sensor stellt die Betätigung des Betätigungselements 19 fest oder stellt auf andere Weise fest, dass die Gebläseeinheit 5 nunmehr eingeschaltet ist (Ereignis E3).
- Als Reaktion auf das Einschalten der Gebläseeinheit 5 aktiviert das Steuergerät 6 die Strombegrenzungs-Schaltung 13 (Schritt S4). Die Strombegrenzungs-Schaltung 13 ist nunmehr wieder im aktivierten Zustand (Zustand 13:Z1).
- Das Steuergerät 6 prüft, ob das zweite deaktivierende Ereignis eingetreten ist (Prüfung dE2?). Das zweite deaktivierende Ereignis kann genauso wie das erste deaktivierende Ereignis festgelegt sein oder sich von ihm unterscheiden.
- Sobald das zweite deaktivierende Ereignis detektiert ist (Zweig Ja), deaktiviert das Steuergerät 6 die Strombegrenzungs-Schaltung 13 wieder (Schritt S2). Die Strombegrenzungs-Schaltung 13 ist nunmehr im deaktivierten Zustand (Zustand 13:Z2). Strom kann von dem Akkupack 2 über die Energieschnittstelle 9 zur internen Energiespeichereinheit 7 und weiter zur eingeschalteten Gebläseeinheit 5 fließen, ohne dass die Strombegrenzungs-Schaltung 13 die Stromstärke begrenzt.
- Nach einiger Zeit detektiert der Verbindungs-Sensor 17, dass das Akkupack 2 verbraucht ist und ausgetauscht werden muss (Schritt 17:E3).
- Der Benutzer entnimmt das Akkupack 2 aus der Aufnahmeeinheit 8. Dadurch wird die elektrische Verbindung zwischen dem Akkupack 2 und der Energieschnittstelle 9 unterbrochen (Schritt S5). Die Gebläseeinheit 5 bleibt eingeschaltet.
- Der Verbindungs-Sensor 17 stellt fest, dass sich in der Aufnahmeeinheit 8 kein Akkupack 2 mehr befindet (Schritt 17:E2).
- Das Steuergerät 6 aktiviert als Reaktion hierauf die Strombegrenzungs-Schaltung 13 (Schritt S4).
- Die Strombegrenzungs-Schaltung 13 ist wieder im aktivierten Zustand (Zustand 13:Z1).
- Der Benutzer setzt ein neues Akkupack 2 ein (Schritt S1).
- Der Verbindungs-Sensor 17 liefert ein Signal, dass das Akkupack 2 mit der Energieschnittstelle 9 elektrisch verbunden ist (Ereignis 17:E1). Der Zustand 2:Z2 ist festgestellt.
- Das Steuergerät 6 prüft, ob das erste deaktivierende Ereignis eingetreten ist (Prüfung dE1?).
- Sobald dies der Fall ist (Zweig Ja), deaktiviert das Steuergerät 6 die Strombegrenzungs-Schaltung 13 (Schritt S2). Die Strombegrenzungs-Schaltung 13 ist nunmehr im deaktivierten Zustand (Zustand 13:Z2).

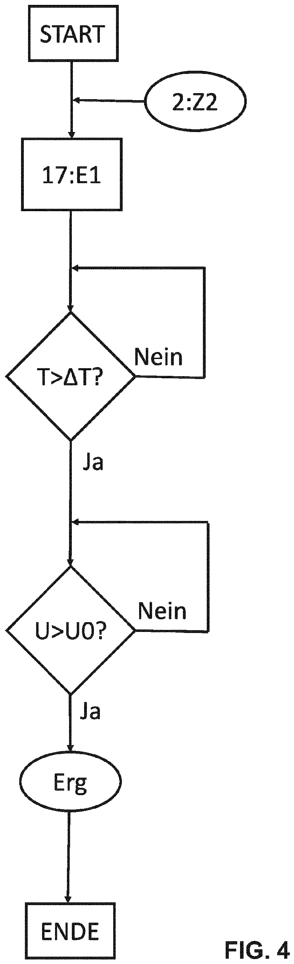

Figur 4 zeigt eine mögliche Ausgestaltung, wie das erste deaktivierende Ereignis detektiert wird (Prüfung dE1? in Figur 3).
- Der Verbindungs-Sensor 17 detektiert, dass ein Akkupack 2 in die Aufnahmeeinheit 8 eingesetzt ist (Ereignis 17:E1).
- Der Zeitspannen-Sensor 18 prüft, ob seit dem Einsetzen des Akkupacks 2 in die Aufnahmeeinheit 8 die vorgegebene Zeitspanne ΔT verstrichen ist. Diese Zeitspanne ΔT liegt vorzugsweise unter einer Sekunde, besonders bevorzugt unter einer halben Sekunde.
- Sobald dies der Fall ist, prüft der Spannungs-Sensor 16, ob die Ladespannung U der internen Energiespeichereinheit 7 oberhalb einer vorgegebenen Ladespannungs-Schranke U0 liegt.
- Sobald dies der Fall ist, ist das Ergebnis Erg erzielt, dass das deaktivierende Ereignis eingetreten ist.

In dieser Ausgestaltung müssen also beide Ereignisse eingetreten sein, nämlich die vorgegebene Zeitspanne ΔT seit dem Verbinden verstrichen sein und die Ladespannung U oberhalb der vorgegebenen Ladespannungs-Schranke U0 liegen. Selbstverständlich kann die Prüfung auch in umgekehrter Reihenfolge oder parallel durchgeführt werden.

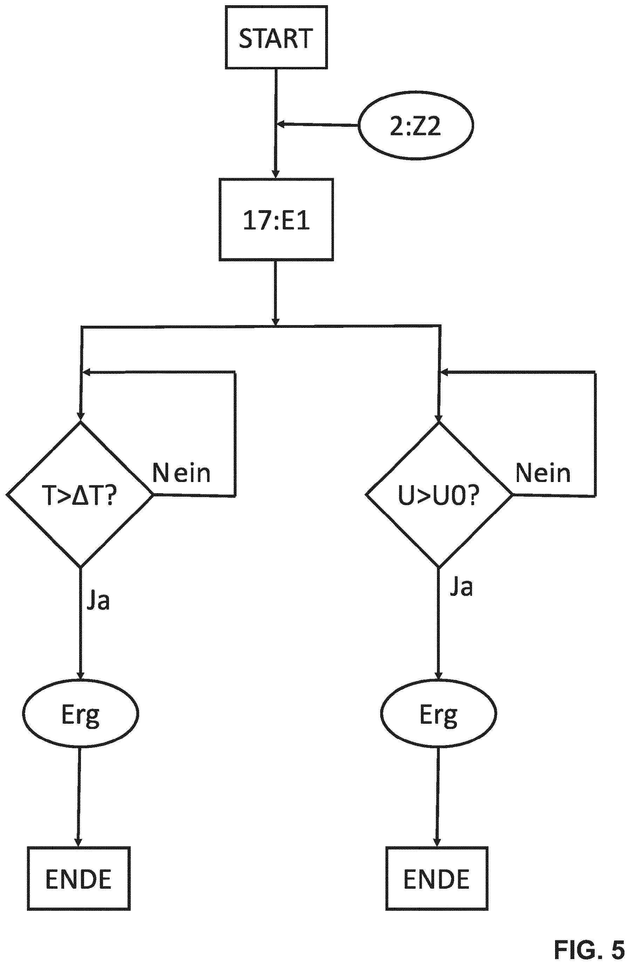

Figur 5 zeigt eine alternative Ausgestaltung, wie das erste deaktivierende Ereignis detektiert wird. In dieser alternativen Ausgestaltung werden die beiden Prüfungen parallel durchgeführt. Das deaktivierende Ereignis ist eingetreten, sobald die Zeitschranke ΔT verstrichen ist oder die Ladespannung U oberhalb der Ladespannungs-Schranke U0 liegt. Falls also die Ladespannung U bereits vor Ablauf der Zeitspanne ΔT oberhalb der Ladespannungs-Schranke U0 liegt, so deaktiviert das Steuergerät 6 die Strombegrenzungs-Schaltung 13 bereits vor Ablauf dieser Zeitspanne.

Möglich ist, dass der Benutzer die Gebläseeinheit 5 ausschaltet (Zustand 5:Z1), beispielsweise während einer Pause. Dies löst folgenden Ablauf aus:
- Der nicht gezeigte Sensor stellt die Betätigung des Betätigungselements 19 fest und dass die Gebläseeinheit 5 nunmehr ausgeschaltet ist.
- Als Reaktion hierauf aktiviert das Steuergerät 6 die Strombegrenzungs-Schaltung 13, sodass diese im aktivierten Zustand ist (Zustand 13:Z1).
- Die Strombegrenzungs-Schaltung 13 verbleibt im aktivierten Zustand.
- Sobald der Sensor feststellt, dass das Betätigungselement 19 erneut betätigt wurde und die Gebläseeinheit 5 eingeschaltet ist, prüft das Steuergerät 6, ob das zweite deaktivierende Ereignis eingetreten ist (Prüfung dE2?).
- Sobald dies der Fall ist, deaktiviert das Steuergerät 6 wieder die Strombegrenzungs-Schaltung 13. Strom kann nunmehr ohne Begrenzung zur Gebläseeinheit 5 fließen.

In der gerade beschriebenen Ausgestaltung aktiviert das Steuergerät 6 die Strombegrenzungs-Schaltung 13 als Reaktion darauf, dass ein Benutzer das Betätigungselement 19 für die Gebläseeinheit 5 betätigt hat. In einer abweichenden Ausgestaltung wird das Steuergerät 6 nicht dafür verwendet, nach einem Einschalten der Gebläseeinheit 5 die Strombegrenzungs-Schaltung 13 zu aktivieren, sondern nur dazu, sie nach der Detektion des deaktivierenden Ereignisses wieder zu deaktivieren. In dieser abweichenden Ausgestaltung ist das Betätigungselement 19 mechanisch mit einem Schalter verbunden, beispielsweise mit einem Stift. Dieser Schalter verbindet wahlweise die Strombegrenzungs-Schaltung 13 mit der Energieschnittstelle 9 oder trennt diese voneinander. Solange die Gebläseeinheit 5 ausgeschaltet ist, sind die Strombegrenzungs-Schaltung 13 und damit auch die interne Energiespeichereinheit 7 elektrisch von der Energieschnittstelle 9 getrennt. Sobald der Benutzer mittels des Betätigungselements 19 die Gebläseeinheit 5 eingeschaltet, stellt der Schalter die elektrische Verbindung zwischen der Energieschnittstelle 9 und der Strombegrenzungs-Schaltung 13 her. Die interne Energiespeichereinheit 7 wird aufgeladen, wobei die Strombegrenzungs-Schaltung 13 die Stromstärke begrenzt.

Wie in der vorherigen Ausgestaltung aktiviert bevorzugt das Steuergerät 6 die Strombegrenzungs-Schaltung 13, sobald das zweite deaktivierende Ereignis detektiert ist. Sobald der Benutzer mittels des Betätigungselements 19 die Gebläseeinheit 5 wieder ausschaltet, aktiviert das Steuergerät 6 die Strombegrenzungs-Schaltung 13, beispielsweise indem das Steuergerät 6 die elektrische Umgehung unterbricht. Außerdem wird die Strombegrenzungs-Schaltung 13 elektrisch von der Energieschnittstelle 9 getrennt, weil der Schalter für die entsprechende elektrische Verbindung bewegt wird. Es reicht aus, dass das Betätigungselement 19 mit diesem einen Schalter für die elektrische Verbindung zwischen der Energieschnittstelle 9 und der Strombegrenzungs-Schaltung 13 verbunden ist.

**Bezugszeichenliste**

| | |
|---|---|
| 1 | Gebläsefiltersystem, umfasst das Gebläsefiltergerät 3, den Akkupack 2 in der Aufnahmeeinheit 8 und die Filterpatrone 15 in der Filteraufnahme 14 |
| 2 | mobile Spannungsversorgungseinheit in Form eines Akkupacks, lässt sich in die Aufnahmeeinheit 8 einschieben |
| 3 | Gebläsefiltergerät |
| 4 | Gehäuse des Gebläsefiltergeräts 3 |
| 5 | Gebläseeinheit, umfasst ein Lüfterrad, einen Motor und einen Umrichter |
| 6 | Steuergerät, empfängt Messwerte von der Sensor-Anordnung 16, 17, 18, detektiert das erste und das zweite deaktivierende Ereignis und deaktiviert die Strombegrenzungs-Vorrichtung 11 |
| 7 | interne Energiespeichereinheit, umfasst im Ausführungsbeispiel zwei Kondensatoren |
| 8 | Aufnahmeeinheit zum Aufnehmen des Akkupacks 2 |
| 9 | Energieschnittstelle, dauerhaft elektrisch mit der internen Energiespeichereinheit 7 verbunden, umfasst die Kontaktstellen 9.1, 9.2 |
| 9.1, 9.2 | Kontaktstellen der Energieschnittstelle 9 |
| 10.1, 10.2 | Kontaktstellen (Terminals) des Akkupacks 2 |
| 11 | Strombegrenzungs-Vorrichtung |
| 12 | schaltbare elektrische Verbindungseinheit |
| 13 | Strombegrenzungs-Schaltung, umfasst die Strombegrenzungs-Vorrichtung 11 und die Verbindungseinheit 12 |
| 14 | Filteraufnahme, nimmt die Filterpatrone 15 auf |
| 15 | Filterpatrone, in der Filteraufnahme 14 aufgenommen |
| 16 | Spannungs-Sensor für die Ladespannung der internen Energiespeichereinheit 7 |
| 17 | Verbindungs-Sensor, liefert ein Signal, welches anzeigt, ob ein Akkupack 2 elektrisch mit der Energieschnittstelle 9 verbunden ist oder nicht |
| 18 | Systemuhr im Steuergerät 6, misst die Zeitspanne, die seit dem Einsetzen eines Akkupacks 2 in die Aufnahmeeinheit 8 verstrichen ist |
| 19 | Betätigungselement für die Gebläseeinheit 5 |
| 2:Z1 | Zustand: Akkupack 2 von Energieschnittstelle 9 getrennt |
| 2:Z2 | Zustand: Akkupack 2 mit Energieschnittstelle 9 verbunden |
| 5:Z1 | Zustand: Gebläseeinheit 5 ausgeschaltet |
| 5:Z2 | Zustand: Gebläseeinheit 5 eingeschaltet |
| 13:Z1 | Zustand: Strombegrenzungs-Schaltung 13 im aktivierten Zustand |
| 13:Z2 | Zustand: Strombegrenzungs-Schaltung 13 im deaktivierten Zustand |
| 17:E1 | Ereignis: Verbindungs-Sensor 17 liefert Signal: Akkupack 2 mit Energieschnittstelle 9 elektrisch verbunden |
| 17:E2 | Ereignis: Verbindungs-Sensor 17 liefert Signal: Akkupack 2 von Energieschnittstelle 9 elektrisch getrennt |
| 17:E3 | Schritt: Verbindungs-Sensor 17 erzeugt das Signal, dass das Akkupack 2 nicht mehr ausreichend Strom liefert (Spannung zu niedrig) |
| dE1? | Prüfung: erstes deaktivierendes Ereignis eingetreten? |
| d E2? | Prüfung: zweites deaktivierendes Ereignis eingetreten? |
| E3 | Ereignis: Betätigung des Betätigungselements 19 festgestellt |
| Erg | Ergebnis: deaktivierendes Ereignis detektiert |
| S1 | Schritt: Akkupack 2 in Aufnahmeeinheit 8 einsetzen, elektrische Verbindung mit Energieschnittstelle 9 herstellen |
| S2 | Schritt: Strombegrenzungs-Schaltung 13 deaktivieren |
| S3 | Schritt: Betätigungselement 19 für die Gebläseeinheit 5 einschalten |
| S4 | Schritt: Strombegrenzungs-Schaltung 13 aktivieren |
| S5 | Schritt: Akkupack 2 aus Aufnahmeeinheit 8 entnehmen, elektrische Verbindung mit Energieschnittstelle 9 unterbrechen |
| T>ΔT? | Prüfung: Ist seit dem Verbinden die vorgegebene Zeitspanne ΔT verstrichen? |
| U>U0? | Prüfung: Ladespannung U der internen Energiespeichereinheit 7 oberhalb der vorgegebenen Ladespannungs-Schranke U0? |

## Patentansprüche

1. Gebläsefiltergerät (3) umfassend
- eine Gebläseeinheit (5) zum Erzeugen eines Luftstroms,
- eine Filteraufnahme (14) zum Aufnehmen einer Filtereinheit (15),
- eine interne Energiespeichereinheit (7),
- eine Energieschnittstelle (9),
- eine Strombegrenzungs-Vorrichtung (13), die wahlweise aktivierbar oder deaktivierbar ist,
- eine Sensor-Anordnung (16, 17, 18) und
- ein Steuergerät (6)
wobei die interne Energiespeichereinheit (7)
- sowohl mit der Gebläseeinheit (5) als auch mit der Energieschnittstelle (9) elektrisch verbunden ist und
- mit elektrischer Energie aufladbar ist und elektrische Energie abzugeben vermag und
wobei die Energieschnittstelle (9) wahlweise
- mit einer Spannungsversorgungseinheit (2) elektrisch verbindbar oder
- von dieser elektrisch trennbar ist,
wobei das Gebläsefiltergerät (3) so ausgestaltet ist, dass die Strombegrenzungs-Vorrichtung (13) mindestens dann aktiviert ist, wenn die Energieschnittstelle (9) von der Spannungsversorgungseinheit (2) getrennt ist,
wobei die aktivierte Strombegrenzungs-Vorrichtung (13) dazu ausgestaltet ist, die Stärke eines Stroms von der Energieschnittstelle (9) zur internen Energiespeichereinheit (7) unterhalb einer vorgegebenen Grenzstromstärke zu halten, wobei die Sensor-Anordnung (16, 17, 18) dazu ausgestaltet ist, ein vorgegebenes deaktivierendes Ereignis zu detektieren,
und wobei das Steuergerät (6) dazu ausgestaltet ist, nach dem Detektieren des deaktivierenden Ereignisses die Strombegrenzungs-Vorrichtung (13) dergestalt zu deaktivieren, dass nach der Deaktivierung die interne Energiespeichereinheit (7) ohne Begrenzung auf die Grenzstromstärke mit der Energieschnittstelle (9) elektrisch verbunden ist,
**dadurch gekennzeichnet, dass**
das deaktivierende Ereignis dann eingetreten ist,
- wenn der Ladezustand (U) der internen Energiespeichereinheit (7) eine vorgegebene Ladezustands-Schranke (U0) überschritten hat und/oder
- wenn seit dem Herstellen einer elektrischen Verbindung zwischen der Energieschnittstelle (9) und der Spannungsversorgungseinheit (2) eine vorgegebene Zeitspanne (ΔT) verstrichen ist.

2. Gebläsefiltergerät (3) nach Anspruch 1,
**dadurch gekennzeichnet, dass**
die Sensor-Anordnung (16, 17, 18) einen Spannungs-Sensor (16) umfasst, welcher dazu ausgestaltet ist, eine Größe zu messen, die mit der elektrischen Ausgangsspannung oder Ladespannung (U) der internen Energiespeichereinheit (7) korreliert.

3. Gebläsefiltergerät (3) nach einem der vorhergehenden Ansprüche,
**dadurch gekennzeichnet, dass**
die Sensor-Anordnung (16, 17, 18)
- einen Verbindungs-Sensor (17) und
- einen Zeitspannen-Sensor (18)
umfasst,
wobei der Verbindungs-Sensor (17) dazu ausgestaltet ist, das Ereignis zu detektieren, dass die Spannungsversorgungseinheit (2) mit der Energieschnittstelle (9) elektrisch verbunden ist, und
wobei der Zeitspannen-Sensor (18) dazu ausgestaltet ist,
- die Zeit (T) zu messen, die seit dem Herstellen einer elektrischen Verbindung zwischen der Energieschnittstelle (9) und der Spannungsversorgungseinheit (2) verstrichen ist, und
- die verstrichene Zeit (T) mit einem vorgegebenen Schwellenwert (ΔT) zu vergleichen.

4. Gebläsefiltergerät (3) nach einem der vorhergehenden Ansprüche,
**dadurch gekennzeichnet, dass**
die Strombegrenzungs-Vorrichtung (13)
- eine Strombegrenzungseinheit (11) und
- eine schaltbare elektrische Verbindungseinheit (12)
umfasst,
wobei die Verbindungseinheit (12) parallel zur Strombegrenzungseinheit (11) angeordnet ist,
wobei die schaltbare elektrische Verbindungseinheit (12)
- in einem Durchleitungszustand die Energieschnittstelle (9) mit der internen Energiespeichereinheit (7) elektrisch verbindet und
- in einem Sperrzustand diese Verbindung unterbricht und
wobei das Steuergerät (6) dazu ausgestaltet ist,
- nach dem Detektieren des deaktivierenden Ereignisses die elektrische Verbindungseinheit (12) aus dem Sperrzustand in den Durchleitungszustand zu schalten.

5. Gebläsefiltergerät (3) nach einem der vorhergehenden Ansprüche,
**dadurch gekennzeichnet, dass**
die schaltbare elektrische Verbindungseinheit (12) eine Zweirichtungs-Thyristordiode und/oder eine Zweirichtungs-Diode und/oder einen Transistor und/oder ein Relais und/oder einen mechanischen Kontakt und/oder eine Funkenstrecke aufweist.

6. Gebläsefiltergerät (3) nach einem der vorhergehenden Ansprüche,
**dadurch gekennzeichnet, dass**
die Strombegrenzungs-Vorrichtung (13) mindestens ein elektronisches Bauteil mit einem veränderbaren elektrischen Widerstandswert aufweist,
wobei das Steuergerät (6) dazu ausgestaltet ist, nach dem Detektieren des deaktivierenden Ereignisses den elektrischen Widerstandswert dieses Bauteils zu reduzieren.

7. Gebläsefiltergerät (3) nach Anspruch 6,
**dadurch gekennzeichnet, dass**
das elektronische Bauteil mindestens einen Transistor und / oder ein Potentiometer umfasst.

8. Gebläsefiltergerät (3) nach Anspruch 7,
**dadurch gekennzeichnet, dass**
das Steuergerät (6) dazu ausgestaltet ist, den elektrischen Widerstandswert abhängig vom Ladezustand der internen Energiespeichereinheit (7) zu reduzieren.

9. Gebläsefiltergerät (3) nach Anspruch 7 oder Anspruch 8,
**dadurch gekennzeichnet, dass**
das elektronische Bauteil mindestens einen Transistor umfasst,
der wahlweise teilweise oder voll aufsteuerbar ist,
wobei der elektrische Widerstandwert des teilweise aufgesteuerten Transistors größer ist als der des voll aufgesteuerten Transistors.

10. Gebläsefiltergerät (3) nach einem der vorhergehenden Ansprüche,
**dadurch gekennzeichnet, dass**
das Steuergerät (6) dazu ausgestaltet ist, automatisch als Reaktion auf ein Trennen der Energieschnittstelle (9) von der Spannungsversorgungseinheit (2) die Strombegrenzungs-Vorrichtung (13) zu aktivieren.

11. Gebläsefiltergerät (3) nach einem der vorhergehenden Ansprüche,
**dadurch gekennzeichnet, dass**
die Gebläseeinheit (5) einschaltbar und ausschaltbar ist und
das Gebläsefiltergerät (3) dazu ausgestaltet ist, automatisch als Reaktion auf ein Einschalten und / oder Ausschalten der Gebläseeinheit (5) die Strombegrenzungs-Vorrichtung (13) zu aktivieren.

12. Gebläsefiltergerät (3) nach Anspruch 11,
**dadurch gekennzeichnet, dass**
das Gebläsefiltergerät (3) ein Betätigungselement (19) zum Einschalten und Ausschalten der Gebläseeinheit (5) umfasst,
wobei das Betätigungselement (19) dergestalt mit einer elektrischen Verbindung zwischen der Strombegrenzungs-Vorrichtung (13) und der Energieschnittstelle (9) verbunden ist,
dass ein Betätigen des Betätigungselements (19) zum Einschalten der Gebläseeinheit (5) die Strombegrenzungs-Vorrichtung (13) elektrisch mit der Energieschnittstelle (9) verbindet und
ein Betätigen des Betätigungselements (19) zum Ausschalten der Gebläseeinheit (5) die Strombegrenzungs-Vorrichtung (13) elektrisch von der Energieschnittstelle (9) trennt.

13. Gebläsefiltergerät (3) nach einem der vorhergehenden Ansprüche,
**dadurch gekennzeichnet, dass**
das Gebläsefiltergerät (3) eine Aufnahmeeinheit (8) zum Aufnehmen einer mobilen Spannungsversorgungseinheit (2), insbesondere eines Akkupacks (2), umfasst,
wobei die Aufnahmeeinheit (8) so ausgestaltet ist, dass eine von der Aufnahmeeinheit (8) aufgenommene mobile Spannungsversorgungseinheit (2) lösbar mit der Energieschnittstelle (9) elektrisch verbunden ist.

14. Gebläsefiltersystem (1) umfassend
- ein Gebläsefiltergerät (3) nach einem der vorhergehenden Ansprüche und
- eine Spannungsversorgungseinheit (2),
wobei die Energieschnittstelle (9) wahlweise mit der Spannungsversorgungseinheit (2) elektrisch verbindbar oder von dieser elektrisch trennbar ist.

15. Atemluftversorgungssystem umfassend
- ein Gebläsefiltergerät (3) nach einem der Ansprüche 1 bis 13 oder ein Gebläsefiltersystem (1) nach Anspruch 14,
- eine Gesichtsmaske und
- eine Verbindungseinheit, welche wenigstens zeitweise eine Fluidverbindung zwischen dem Gebläsefiltergerät (3) und der Gesichtsmaske herstellt.

16. Verfahren zum Betrieb eines Gebläsefiltergeräts (3),
wobei das Gebläsefiltergerät (3)
- eine Gebläseeinheit (5) zum Erzeugen eines Luftstroms,
- eine Filteraufnahme (14) zum Aufnehmen einer Filtereinheit (15),
- eine interne Energiespeichereinheit (7),
- eine Energieschnittstelle (9),
- eine Strombegrenzungs-Vorrichtung (13),
- ein Steuergerät (6) und
- eine Sensor-Anordnung (16, 17, 18)
umfasst,
wobei die interne Energiespeichereinheit (7) mit der Energieschnittstelle (9) elektrisch verbunden ist und
wobei mindestens einmal der Schritt durchgeführt wird, die Energieschnittstelle (9) mit einer Spannungsversorgungseinheit (2) elektrisch zu verbinden,
und wobei die Strombegrenzungs-Vorrichtung (13) vor dem Schritt des elektrischen Verbindens aktiviert ist oder wird und
wobei nach dem Verbinden die Schritte durchgeführt werden, dass
- die aktivierte Strombegrenzungs-Vorrichtung (13) die Stärke eines Stroms von der Energieschnittstelle (9) zur internen Energiespeichereinheit (7) unterhalb einer vorgegebenen Grenzstromstärke hält,
- die Sensor-Anordnung (16, 17, 18) ein vorgegebenes deaktivierendes Ereignis detektiert, und
- das Steuergerät (6) nach dem Detektieren des deaktivierenden Ereignisses die Strombegrenzungs-Vorrichtung (13) dergestalt deaktiviert, dass nach der Deaktivierung die Stärke eines Stroms von der Energieschnittstelle (9) zur internen Energiespeichereinheit (7) nicht auf die Grenzstromstärke begrenzt wird,
**dadurch gekennzeichnet, dass**
das deaktivierende Ereignis dann eingetreten ist,
- wenn der Ladezustand der internen Energiespeichereinheit (7) eine vorgegebene Ladezustands-Schranke (U0) überschritten hat und/oder
- wenn seit dem Herstellen einer elektrischen Verbindung zwischen der Energieschnittstelle (9) und der Spannungsversorgungseinheit (2) eine vorgegebene Zeitspanne (ΔT) verstrichen ist.

17. Verfahren nach Anspruch 16,
**dadurch gekennzeichnet, dass**
das Gebläsefiltergerät (3) eine Aufnahmeeinheit (8) zum Aufnehmen einer mobilen Spannungsversorgungseinheit (2), insbesondere eines Akkupacks (2), umfasst und
der Schritt, die Energieschnittstelle (9) mit der Spannungsversorgungseinheit (2) elektrisch zu verbinden,
mit einer mobilen Spannungsversorgungseinheit (2) durchgeführt wird und den Schritt umfasst, dass die mobile Spannungsversorgungseinheit (2) dergestalt in die Aufnahmeeinheit (8) eingeführt wird, dass die mobile Spannungsversorgungseinheit (2) nach dem Einführen mit der Energieschnittstelle (9) elektrisch verbunden ist.

18. Verfahren nach Anspruch 16 oder Anspruch 17,
**dadurch gekennzeichnet, dass**
mindestens einer der Schritte,
- die Energieschnittstelle (9) mit der Spannungsversorgungseinheit (2) zu verbinden oder
- die Energieschnittstelle (9) von der Spannungsversorgungseinheit (2) zu trennen,
automatisch detektiert wird und
den Schritt auslöst, dass das Steuergerät (6) die Strombegrenzungs-Vorrichtung (13) automatisch aktiviert.

19. Verfahren nach einem der Ansprüche 16 bis 18,
**dadurch gekennzeichnet, dass**
die Gebläseeinheit (5) sich einschalten und wieder ausschalten lässt,
wobei die Strombegrenzungs-Vorrichtung (13) bei ausgeschalteter Gebläseeinheit (5) aktiviert ist oder wird,
wobei der Schritt, die Gebläseeinheit (5) auszuschalten, den Schritt auslöst, dass das Steuergerät (6) die Strombegrenzungs-Vorrichtung (13) aktiviert und
wobei der Schritt, die Gebläseeinheit (5) einzuschalten, den Schritt auslöst, dass das Steuergerät (6) nach dem Detektieren des deaktivierenden Ereignisses die Strombegrenzungs-Vorrichtung (13) deaktiviert.

## Claims

1. Fan filter device (3) comprising
- a fan unit (5) for generating an air flow,
- a filter receptacle (14) for accommodating a filter unit (15),
- an internal energy storage unit (7),
- an energy interface (9),
- a current-limiting apparatus (13) which is selectively able to be activated or deactivated,
- a sensor arrangement (16, 17, 18) and
- a control device (6),
wherein the internal energy storage unit (7)
- is electrically connected both to the fan unit (5) and to the energy interface (9) and
- is rechargeable with electrical energy and is able to deliver electrical energy and
wherein the energy interface (9) is selectively
- able to be electrically connected to a power supply unit (2) or
- able to be electrically disconnected from the latter,
wherein the fan filter device (3) is configured such that the current-limiting apparatus (13) is activated at least when the energy interface (9) is disconnected from the power supply unit (2),
wherein the activated current-limiting apparatus (13) is configured to keep the intensity of a current from the energy interface (9) to the internal energy storage unit (7) below a predefined limit current intensity,
wherein the sensor arrangement (16, 17, 18) is configured to detect a predefined deactivating event,
and wherein the control device (6) is configured so as, after the deactivating event has been detected, to deactivate the current-limiting apparatus (13) in such a way that, after the deactivation, the internal energy storage unit (7) is electrically connected to the energy interface (9) without being limited to the limit current intensity,
**characterized in that**
the deactivating event has occurred
- when the state of charge (U) of the internal energy storage unit (7) has exceeded a predefined state-of-charge limit (UO) and/or
- when a predefined period of time (ΔT) has elapsed since an electrical connection was established between the energy interface (9) and the power supply unit (2).

2. Fan filter device (3) according to Claim 1,
**characterized in that**
the sensor arrangement (16, 17, 18) comprises a voltage sensor (16) which is configured to measure a quantity which correlates with the electrical output voltage or charging voltage (U) of the internal energy storage unit (7).

3. Fan filter device (3) according to either of the preceding claims, **characterized in that**
the sensor arrangement (16, 17, 18) comprises
- a connection sensor (17) and
- a time sensor (18),
wherein the connection sensor (17) is configured to detect the event of the power supply unit (2) being electrically connected to the energy interface (9), and
wherein the time sensor (18) is configured
- to measure the time (T) which has elapsed since an electrical connection was established between the energy interface (9) and the power supply unit (2), and
- to compare the elapsed time (T) with a predefined threshold value (ΔT).

4. Fan filter device (3) according to one of the preceding claims, **characterized in that**
the current-limiting apparatus (13) comprises
- a current-limiting unit (11) and
- a switchable electrical connection unit (12),
wherein the connection unit (12) is arranged in parallel with the current-limiting unit (11),
wherein the switchable electrical connection unit (12)
- electrically connects the energy interface (9) to the internal energy storage unit (7) in an on state and
- interrupts this connection in an off state and
wherein the control device (6) is configured so as,
- after the deactivating event has been detected, to switch the electrical connection unit (12) from the off state to the on state.

5. Fan filter device (3) according to one of the preceding claims, **characterized in that**
the switchable electrical connection unit (12) has a bidirectional thyristor diode and/or a bidirectional diode and/or a transistor and/or a relay and/or a mechanical contact and/or a spark gap.

6. Fan filter device (3) according to one of the preceding claims, **characterized in that**
the current-limiting apparatus (13) has at least one electronic component having a variable electrical resistance value,
wherein the control device (6) is configured so as, after the deactivating event has been detected, to reduce the electrical resistance value of this component.

7. Fan filter device (3) according to Claim 6,
**characterized in that**
the electronic component comprises at least one transistor and/or one potentiometer.

8. Fan filter device (3) according to Claim 7,
**characterized in that**
the control device (6) is configured to reduce the electrical resistance value depending on the state of charge of the internal energy storage unit (7).

9. Fan filter device (3) according to Claim 7 or Claim 8,
**characterized in that**
the electronic component comprises at least one transistor which is selectively able to be partially or fully turned on,
wherein the electrical resistance value of the partially turned-on transistor is greater than that of the fully turned-on transistor.

10. Fan filter device (3) according to one of the preceding claims, **characterized in that**
the control device (6) is configured to automatically activate the current-limiting apparatus (13) in response to the energy interface (9) being disconnected from the power supply unit (2).

11. Fan filter device (3) according to one of the preceding claims, **characterized in that**
the fan unit (5) is able to be switched on and off and
the fan filter device (3) is configured to automatically activate the current-limiting apparatus (13) in response to the fan unit (5) being switched on and/or off.

12. Fan filter device (3) according to Claim 11,
**characterized in that**
the fan filter device (3) comprises an actuating element (19) for switching the fan unit (5) on and off,
wherein the actuating element (19) is connected to an electrical connection between the current-limiting apparatus (13) and the energy interface (9) in such a way
that actuating the actuating element (19) to switch on the fan unit (5) electrically connects the current-limiting apparatus (13) to the energy interface (9) and
actuating the actuating element (19) to switch off the fan unit (5) electrically disconnects the current-limiting apparatus (13) from the energy interface (9).

13. Fan filter device (3) according to one of the preceding claims, **characterized in that**
the fan filter device (3) comprises a receptacle unit (8) for accommodating a mobile power supply unit (2), in particular a rechargeable battery pack (2), wherein the receptacle unit (8) is configured such that a mobile power supply unit (2) accommodated by the receptacle unit (8) is electrically connected to the energy interface (9) in a detachable manner.

14. Fan filter system (1) comprising
- a fan filter device (3) according to one of the preceding claims and
- a power supply unit (2),
wherein the energy interface (9) is selectively able to be electrically connected to the power supply unit (2) or electrically disconnected from the latter.

15. Respiratory air supply system comprising
- a fan filter device (3) according to one of Claims 1 to 13 or a fan filter system (1) according to Claim 14,
- a face mask and
- a connection unit which at least temporarily establishes a fluid connection between the fan filter device (3) and the face mask.

16. Method for operating a fan filter device (3), wherein the fan filter device (3) comprises
- a fan unit (5) for generating an air flow,
- a filter receptacle (14) for accommodating a filter unit (15),
- an internal energy storage unit (7),
- an energy interface (9),
- a current-limiting apparatus (13),
- a control device (6) and
- a sensor arrangement (16, 17, 18),
wherein the internal energy storage unit (7) is electrically connected to the energy interface (9) and
wherein the step of electrically connecting the energy interface (9) to a power supply unit (2) is carried out at least once,
and wherein the current-limiting apparatus (13) is activated before the step of electrical connection and
wherein, after the connection, the steps of
- the activated current-limiting apparatus (13) keeping the intensity of a current from the energy interface (9) to the internal energy storage unit (7) below a predefined limit current intensity,
- the sensor arrangement (16, 17, 18) detecting a predefined deactivating event,
and
- the control device (6), after the deactivating event has been detected, deactivating the current-limiting apparatus (13) in such a way that, after the deactivation, the intensity of a current from the energy interface (9) to the internal energy storage unit (7) is not limited to the limit current intensity are carried out,
**characterized in that**
the deactivating event has occurred
- when the state of charge of the internal energy storage unit (7) has exceeded a predefined state-of-charge limit (UO) and/or
- when a predefined period of time (ΔT) has elapsed since an electrical connection was established between the energy interface (9) and the power supply unit (2).

17. Method according to Claim 16,
**characterized in that**
the fan filter device (3) comprises a receptacle unit (8) for accommodating a mobile power supply unit (2), in particular a rechargeable battery pack (2), and
the step of electrically connecting the energy interface (9) to the power supply unit (2)
is carried out using a mobile power supply unit (2) and comprises the step of inserting the mobile power supply unit (2) into the receptacle unit (8) in such a way that the mobile power supply unit (2) is electrically connected to the energy interface (9) after being inserted.

18. Method according to Claim 16 or Claim 17,
**characterized in that**
at least one of the steps of
- connecting the energy interface (9) to the power supply unit (2) and
- disconnecting the energy interface (9) from the power supply unit (2) is automatically detected and
triggers the step of the control device (6) automatically activating the current-limiting apparatus (13).

19. Method according to one of Claims 16 to 18,
**characterized in that**
the fan unit (5) can be switched on and switched off again,
wherein the current-limiting apparatus (13) is activated when the fan unit (5) is switched off,
wherein the step of switching off the fan unit (5) triggers the step of the control device (6) activating the current-limiting apparatus (13) and
wherein the step of switching on the fan unit (5) triggers the step of the control device (6), after the deactivating event has been detected, deactivating the current-limiting apparatus (13).

## Revendications

1. Appareil (3) de filtration ventilée, comprenant
- une unité (5) à soufflante, destinée à engendrer un courant d'air,
- un logement (14) de filtre, dévolu à la réception d'une unité de filtration (15),
- une unité interne (7) de stockage d'énergie,
- un interface énergétique (9),
- un dispositif (13) limiteur de courant, pouvant être sélectivement activé ou désactivé,
- un ensemble de détection (16, 17, 18) et
- un appareil de commande (6),
sachant que l'unité interne (7) de stockage d'énergie
- est raccordée électriquement tant à l'unité (5) à soufflante, qu'à l'interface énergétique (9) et
- peut être chargée en énergie électrique et est en capacité de délivrer de l'énergie électrique, et
sachant que ledit interface énergétique (9) peut être sélectivement
- raccordé électriquement à une unité (2) d'alimentation en tension ou
- séparé électriquement d'avec cette dernière,
l'appareil (3) de filtration ventilée étant conçu de telle sorte que le dispositif (13) limiteur de courant soit activé au moins lorsque ledit interface énergétique (9) est séparé d'avec ladite unité (2) d'alimentation en tension,
sachant que ledit dispositif (13) limiteur de courant à l'état activé est conçu pour maintenir, en deçà d'une intensité limite préétablie, l'intensité d'un courant circulant vers l'unité interne (7) de stockage d'énergie à partir de l'interface énergétique (9),
sachant que l'ensemble de détection (16, 17, 18) est conçu pour détecter un événement préétabli à effet désactivateur,
et sachant que ledit appareil de commande (6) est conçu pour désactiver le dispositif (13) limiteur de courant, à l'issue de la détection dudit événement à effet désactivateur, de façon telle qu'à l'issue de ladite désactivation, l'unité interne (7) de stockage d'énergie soit raccordée électriquement à l'interface énergétique (9) sans restriction à l'intensité limite du courant,
**caractérisé par le fait que**
l'événement à effet désactivateur est survenu
- lorsque l'état de charge (U) de l'unité interne (7) de stockage d'énergie a excédé une démarcation préétablie (UO) d'état de charge et/ou
- lorsqu'une période (ΔT) préétablie s'est écoulée depuis l'instauration d'une connexion électrique entre l'interface énergétique (9) et l'unité (2) d'alimentation en tension.

2. Appareil (3) de filtration ventilée selon la revendication 1, **caractérisé par le fait que**
l'ensemble de détection (16, 17, 18) inclut un capteur (16) de tensions, conçu pour mesurer une grandeur en corrélation avec la tension électrique de sortie ou avec la tension de charge (U) de l'unité interne (7) de stockage d'énergie.

3. Appareil (3) de filtration ventilée selon l'une des revendications précédentes,
**caractérisé par le fait que**
l'ensemble de détection (16, 17, 18) inclut
- un capteur (17) de connexions et
- un capteur (18) de périodes,
ledit capteur (17) de connexions étant conçu pour détecter l'événement résidant dans la connexion électrique de l'unité (2) d'alimentation en tension avec l'interface énergétique (9), et
ledit capteur (18) de périodes étant conçu
- pour mesurer le temps (T) qui s'est écoulé depuis l'instauration d'une connexion électrique entre ledit interface énergétique (9) et ladite unité (2) d'alimentation en tension, et
- pour comparer ledit temps écoulé (T) avec une valeur de seuil (ΔT) préétablie.

4. Appareil (3) de filtration ventilée selon l'une des revendications précédentes,
**caractérisé par le fait que**
le dispositif (13) limiteur de courant inclut
- une unité (11) limitatrice de courant et
- une unité commutable (12) de connexion électrique,
laquelle unité de connexion (12) est agencée parallèlement à ladite unité (11) limitatrice de courant,
sachant que ladite unité commutable (12) de connexion électrique
- raccorde électriquement l'interface énergétique (9) à l'unité interne (7) de stockage d'énergie dans un état de conduction et
- interrompt cette connexion dans un état de blocage, et
sachant que l'appareil de commande (6) est conçu
- pour faire passer ladite unité (12) de connexion électrique dudit état de blocage audit état de conduction à l'issue de la détection de l'événement à effet désactivateur.

5. Appareil (3) de filtration ventilée selon l'une des revendications précédentes,
**caractérisé par le fait que**
l'unité commutable (12) de connexion électrique est munie d'un thyristor diode bidirectionnel et/ou d'une diode bidirectionnelle et/ou d'un transistor et/ou d'un relais et/ou d'un contact mécanique et/ou d'un éclateur.

6. Appareil (3) de filtration ventilée selon l'une des revendications précédentes,
**caractérisé par le fait que**
le dispositif (13) limiteur de courant est doté d'au moins un composant électronique à valeur résistive électrique variable,
l'appareil de commande (6) étant conçu pour diminuer la valeur résistive électrique de ce composant à l'issue de la détection de l'événement à effet désactivateur.

7. Appareil (3) de filtration ventilée selon la revendication 6, **caractérisé par le fait que**
le composant électronique inclut au moins un transistor et/ou un potentiomètre.

8. Appareil (3) de filtration ventilée selon la revendication 7, **caractérisé par le fait que**
l'appareil de commande (6) est conçu pour diminuer la valeur résistive électrique en fonction de l'état de charge de l'unité interne (7) de stockage d'énergie.

9. Appareil (3) de filtration ventilée selon la revendication 7 ou la revendication 8,
**caractérisé par le fait que**
le composant électronique inclut au moins un transistor
pouvant être sélectivement ouvert en partie ou en totalité,
la valeur résistive électrique du transistor partiellement ouvert étant supérieure à celle du transistor intégralement ouvert.

10. Appareil (3) de filtration ventilée selon l'une des revendications précédentes,
**caractérisé par le fait que**
l'appareil de commande (6) est conçu pour activer automatiquement le dispositif (13) limiteur de courant en réaction à une séparation de l'interface énergétique (9) d'avec l'unité (2) d'alimentation en tension.

11. Appareil (3) de filtration ventilée selon l'une des revendications précédentes,
**caractérisé par le fait que**
l'unité (5) à soufflante peut être mise en marche et mise à l'arrêt, et
ledit appareil (3) de filtration ventilée est conçu pour activer automatiquement le dispositif (13) limiteur de courant en réaction à une mise en marche et/ou à une mise à l'arrêt de ladite unité (5) à soufflante.

12. Appareil (3) de filtration ventilée selon la revendication 11, **caractérisé par le fait que**
ledit appareil (3) de filtration ventilée inclut un élément d'actionnement (19) affecté à la mise en marche et à la mise à l'arrêt de l'unité (5) à soufflante,
lequel élément d'actionnement (19) est raccordé à une connexion électrique entre le dispositif (13) limiteur de courant et l'interface énergétique (9), de façon telle
qu'une manoeuvre de l'élément d'actionnement (19) raccorde électriquement le dispositif (13) limiteur de courant à l'interface énergétique (9) en vue de la mise en marche de l'unité (5) à soufflante, et
qu'une manoeuvre dudit élément d'actionnement (19) sépare électriquement ledit dispositif (13) limiteur de courant d'avec ledit interface énergétique (9) en vue de la mise à l'arrêt de ladite unité (5) à soufflante.

13. Appareil (3) de filtration ventilée selon l'une des revendications précédentes,
**caractérisé par le fait que**
ledit appareil (3) de filtration ventilée inclut une unité réceptrice (8) dévolue à la réception d'une unité mobile (2) d'alimentation en tension, en particulier d'un bloc accumulateur (2),
laquelle unité réceptrice (8) est conçue de telle sorte qu'une unité mobile (2) d'alimentation en tension, reçue par ladite unité réceptrice (8), soit connectée électriquement à l'interface énergétique (9) de manière libérable.

14. Système (1) de filtration ventilée, comprenant
- un appareil (3) de filtration ventilée conforme à l'une des revendications précédentes et
- une unité (2) d'alimentation en tension,
sachant que l'interface énergétique (9) peut, sélectivement, être raccordé électriquement à ladite unité (2) d'alimentation en tension, ou séparé électriquement d'avec cette dernière.

15. Système d'alimentation en air de respiration, comprenant
- un appareil (3) de filtration ventilée conforme à l'une des revendications 1 à 13, ou un système (1) de filtration ventilée conforme à la revendication 14,
- un masque facial et
- une unité de jonction qui instaure, au moins en partie, une liaison fluidique entre ledit appareil (3) de filtration ventilée et ledit masque facial.

16. Procédé d'exploitation d'un appareil (3) de filtration ventilée,
lequel appareil (3) de filtration ventilée comprend
- une unité (5) à soufflante, destinée à engendrer un courant d'air,
- un logement (14) de filtre, dévolu à la réception d'une unité de filtration (15),
- une unité interne (7) de stockage d'énergie,
- un interface énergétique (9),
- un dispositif (13) limiteur de courant,
- un appareil de commande (6) et
- un ensemble de détection (16, 17, 18),
sachant que l'unité interne (7) de stockage d'énergie est raccordée électriquement à l'interface énergétique (9) et
que l'étape, consistant à raccorder électriquement ledit interface énergétique (9) à une unité (2) d'alimentation en tension, est exécutée au moins une fois, sachant que
le dispositif (13) limiteur de courant se trouve, ou est mis à l'état activé préalablement à l'étape de connexion électrique,
et sachant que les étapes, consistant
- en ce que ledit dispositif (13) limiteur de courant à l'état activé maintient, en deçà d'une intensité limite préétablie, l'intensité d'un courant circulant vers l'unité interne (7) de stockage d'énergie à partir de l'interface énergétique (9),
- en ce que ledit ensemble de détection (16, 17, 18) détecte un événement préétabli à effet désactivateur,
sont exécutées à l'issue de ladite connexion, et
ledit appareil de commande (6) désactive ledit dispositif (13) limiteur de courant, à l'issue de la détection dudit événement à effet désactivateur, de façon telle qu'à l'issue de ladite désactivation, l'intensité d'un courant circulant vers ladite unité interne (7) de stockage d'énergie, à partir dudit interface énergétique (9), ne soit pas restreinte à ladite intensité limite,
**caractérisé par le fait que**
l'événement à effet désactivateur est survenu
- lorsque l'état de charge de l'unité interne (7) de stockage d'énergie a excédé une démarcation préétablie (UO) d'état de charge et/ou
- lorsqu'une période (ΔT) préétablie s'est écoulée depuis l'instauration d'une connexion électrique entre l'interface énergétique (9) et l'unité (2) d'alimentation en tension.

17. Procédé selon la revendication 16,
**caractérisé par le fait que**
l'appareil (3) de filtration ventilée inclut une unité réceptrice (8) dévolue à la réception d'une unité mobile (2) d'alimentation en tension, en particulier d'un bloc accumulateur (2) et
l'étape, consistant à connecter électriquement l'interface énergétique (9) à l'unité (2) d'alimentation en tension, est exécutée à l'aide d'une unité mobile (2) d'alimentation en tension et inclut l'étape résidant dans l'insertion de ladite unité mobile (2) d'alimentation en tension, dans ladite unité réceptrice (8), de façon telle que ladite unité mobile (2) d'alimentation en tension soit connectée électriquement audit interface énergétique (9) à l'issue de ladite insertion.

18. Procédé selon la revendication 16 ou la revendication 17, **caractérisé par le fait**
**qu'**au moins l'une des étapes consistant
- à raccorder l'interface énergétique (9) à l'unité (2) d'alimentation en tension ou
- à séparer ledit interface énergétique (9) d'avec ladite unité (2) d'alimentation en tension
est détectée automatiquement et
déclenche l'étape consistant en ce que l'appareil de commande (6) active automatiquement le dispositif (13) limiteur de courant.

19. Procédé selon l'une des revendications 16 à 18,
**caractérisé par le fait que**
l'unité (5) à soufflante peut être mise en marche, et mise de nouveau à l'arrêt,
le dispositif (13) limiteur de courant se trouvant, ou étant mis à l'état activé lorsque ladite unité (5) à soufflante est à l'arrêt,
sachant que l'étape, résidant dans une mise à l'arrêt de ladite unité (5) à soufflante, déclenche l'étape consistant en ce que l'appareil de commande (6) active ledit dispositif (13) limiteur de courant, et
sachant que l'étape, résidant dans une mise en marche de ladite unité (5) à soufflante, déclenche l'étape consistant en ce que ledit appareil de commande (6) désactive ledit dispositif (13) limiteur de courant à l'issue de la détection de l'événement à effet désactivateur.
